# FASCICULE DE BREVET EUROPEEN

(11) **EP 3 826 861 B1**
(45) Date de publication et mention de la délivrance du brevet: **07.09.2022**
(21) Numéro de dépôt: 19745123.0
(22) Date de dépôt: 24.07.2019
(51) Int. Cl.: B60B 5/02

(54) **VOILE DE ROUE ET MACHINE DE FABRICATION**
RADSCHEIBE UND MASCHINE FÜR DESSEN HERSTELLUNG
WHEEL DISC AND MANUFACTURING TOOL THEREOF

(30) Priorité: 26.07.2018 FR 1856992
(43) Date de publication de la demande: 02.06.2021
(73) Titulaire: C-Inertia, 13593 Aix-en-Provence (FR)
(72) Inventeur: CRASSOUS, Dominique, 06100 Nice (FR)
(74) Mandataire: Hautier IP
(86) Numéro de dépôt international: PCT/EP2019/069931
(87) Numéro de publication internationale: WO 2020/020952

(56) Documents cités:
- EP-A1- 0 525 253
- EP-A1- 0 644 041
- WO-A1-2013/083500
- DE-A1-102009 050 458
- US-A1- 2011 084 541

## Description

### DOMAINE TECHNIQUE DE L'INVENTION

La présente invention concerne le domaine des roues en général, et plus particulièrement les roues de véhicules comprenant des matériaux composites.

### ETAT DE LA TECHNIQUE

Depuis des millénaires, les roues ont été réalisées avec différents matériaux et différentes constructions. Les roues ont ainsi été monobloc, en pierre, mais aussi plus récemment en aluminium. Elles ont aussi été assemblées en bois puis en acier dans les voitures de grande série du début du dernier siècle à nos jours. À travers les époques, certaines constructions ont été marquées par un décalage important entre le matériau utilisé, ses caractéristiques, et la méthode de construction. Les roues monobloc en pierre ont été remplacées par des roues en bois plus légères et plus faciles à fabriquer, mais dont le matériau était peu adapté au dessin massif de la roue en pierre qu'elles reprenaient pourtant. Les roues en bois ont ensuite adopté le concept de roue à rayons parfaitement adapté au matériau.

Plus tard, les premières jantes en aluminium coulé ont été fabriquées avec des dessins proches de ceux des jantes en tôle emboutie puis ont évolué vers les dessins actuels beaucoup plus logiques avec ce matériau. Ce rappel historique et ces quelques exemples choisis parmi des dizaines d'autres, sont révélateurs d'une difficulté d'adaptation des roues aux matériaux nouveaux et permet de comprendre les limites de certaines solutions ainsi que l'intérêt des innovations qui peuvent être proposées pour améliorer ce produit.

Une roue est constituée de trois parties ayant chacune une fonction particulière avec pour chacune des contraintes spécifiques. Les trois parties sont le support du moyeu, celui-ci étant inclus ou non dans la roue, le voile reliant le support du moyeu à la jante et la jante supportant le pneu et assurant, si besoin, l'étanchéité, en cas d'absence de chambre à air.

La jante est elle-même constituée du talon supportant le pneu sur son diamètre intérieur, du rebord maintenant le pneu dans le sens axial et de la base reliant les deux talons entre eux. Les efforts mécaniques sur ces différentes parties sont très différents et supposeraient des matériaux et des conceptions différentes, mais délicates à mixer et assembler dans des produits de grande diffusion.

Pendant des années, la roue en aluminium a tenu le haut du pavé et équipé la majorité des véhicules. Elle a surtout été appréciée pour ses qualités esthétiques et sa facilité de fabrication en rapport d'un coût raisonnable. Cependant, la recherche continue des performances, liée à une réglementation environnementale de plus en plus contraignante, a conduit les fabricants à envisager des roues ultralégères.

Cet accessoire a en effet une caractéristique qui est un effet gyroscopique très important qui fait que son poids pénalise les performances d'une manière très importante en raison d'un poids difficilement compressible et d'un diamètre important.

On connaît par exemple du document US7918513B2, des roues dont le voile en métal est mécaniquement solidarisé à une jante via des éléments de raccordement en matériaux composite cela afin de réduire le poids de la roue.

Le document US 2011/084541 A1 divulgue une roue de bicyclette qui présente une zone centrale de moyeu et une pluralité de rayons. Les rayons peuvent être en matériaux composites et sont raccordées au moyeu à différents endroits de ce dernier.

Néanmoins, ces solutions ne résolvent pas les problématiques précédemment exposées qui concernent l'allègement de la roue tout en conservant une tenue mécanique acceptable.

La présente invention vise à résoudre au moins en partie ces problématiques.

### RESUME DE L'INVENTION

La présente invention concerne un dispositif configuré pour former au moins en partie au moins un voile d'une roue comprenant une jante et au moins un support d'au moins un moyeu définissant un axe de rotation, le dispositif étant caractérisé en ce qu'il comprend au moins :
∘ une zone centrale ;
∘ une zone périphérique entourant en partie la zone centrale ;
∘ une première portion comprenant au moins une première nappe d'au moins un premier matériau composite formé par un premier faisceau, de préférence unidirectionnel, de fibres dans une matrice et s'étendant dans la zone périphérique et dans la zone centrale selon un premier axe d'extension parallèle à une direction principale d'extension des fibres du premier faisceau unidirectionnel ;
∘ une deuxième portion comprenant au moins une deuxième nappe d'au moins un deuxième matériau composite formé par un deuxième faisceau, de préférence unidirectionnel, de fibres dans une matrice et s'étendant dans la zone périphérique et dans la zone centrale selon un deuxième axe d'extension, le deuxième axe d'extension étant différent du premier axe d'extension ;
et en ce que la première portion et la deuxième portion sont superposées l'une relativement à l'autre au niveau de la zone centrale définissant un empilement multidirectionnel de faisceaux, de préférence unidirectionnels.

Avantageusement, on définit alors un empilement multidirectionnel de faisceaux unidirectionnels au sein duquel des parties de la première nappe et des parties de la deuxième nappe sont superposées de manière alternée.

La présente invention permet ainsi la formation au moins en partie d'un voile de roue en utilisant des matériaux composites comprenant de manière très avantageuse des fibres unidirectionnelles formant au moins un faisceau unidirectionnel. Les fibres sont disposées dans le sens des rayons de la roue pour bénéficier au maximum des propriétés en traction du matériau utilisé.

On forme ainsi une partie de roue différenciant le comportement mécanique d'une zone centrale, par exemple au niveau d'un moyeu, et d'une zone périphérique, par exemple comprenant des rayons, le tout sans discontinuité structurelle entre ces deux zones, puisqu'elles sont issues de mêmes nappes de matériau composite. L'efficacité de résistance mécanique rapportée au poids est ainsi optimale.

Ainsi, la direction principale d'extension des fibres unidirectionnelles est colinéaire à la direction des rayons de la roue.

Autrement dit, les fibres unidirectionnelles s'étendent selon un axe d'extension s'étendant dans la zone centrale et dans la zone périphérique du dispositif.

Cette disposition particulière des fibres unidirectionnelles permet d'une part d'obtenir au niveau des rayons de la roue une structure périphérique présentant une haute résistance mécanique relativement à des efforts de traction, efforts s'exerçant en particulier au niveau des rayons d'une roue ; d'autre part, cela permet, par superposition des fibres unidirectionnelles au niveau de la zone centrale du dispositif d'obtenir une structure centrale présentant une haute résistance mécanique relativement à tout type d'efforts que cela soit de traction ou de tension au niveau de la zone centrale du dispositif, et donc de préférence au niveau du support du moyeu de la roue.

La présente invention permet ainsi de réaliser en partie au moins un voile de roue présentant un poids réduit, un coût faible et une résistance mécanique accrue.

En disposant de manière astucieuse les faisceaux unidirectionnels de fibres, la présente invention permet d'obtenir en partie au moins un voile de roue fiable, résistant mécaniquement, léger et bon marché.

De manière particulièrement avantageuse, la présente invention utilise l'anisotropie d'un matériau composite pour fabriquer en partie au moins des voiles monobloc dont différentes zones ont des propriétés mécaniques différentes en fonction de la répartition et de la nature dudit matériau composite.

La présente invention permet donc de créer une roue à rayons à travers un arrangement des fibres dans la partie du voile. La roue comprenant ce voile comporte moins de pièces qu'une roue à rayons métalliques ne nécessite pas d'entretien et il est possible de fabriquer ce voile en peu d'opérations avec peu de pièces et un assemblage, si nécessaire, aisé avec le reste de la roue.

La présente invention permet la réalisation d'une zone centrale de résistance mécanique équivalente à des solutions en aluminium, mais à un poids inférieur.

La présente invention est conçue de telle manière que la zone périphérique, c'est-à-dire celle comprenant les rayons de la roue, soit plus légère que la zone centrale. En effet la zone périphérique correspond à la zone dans laquelle les contraintes sont reprises majoritairement en traction.

La zone centrale est configurée astucieusement pour être plus lourde et plus isotrope que la zone périphérique et pour résister à des contraintes mécaniques beaucoup plus variées en fonction des efforts appliqués sur la roue. Cette zone centrale est disposée proche ou peut comprendre le support du moyeu de la roue par exemple.

La présente invention permet de disposer d'un voile de roue dont la zone centrale comprend des renforts mécaniques multiaxiaux et dont la zone périphérique comprend des rayons en fibres unidirectionnelles. Ainsi, de manière astucieuse, le poids de la structure est réduit et celle-ci est optimisée relativement aux différents efforts mécaniques supportés par ses différentes zones.

De manière avantageuse, le dispositif selon la présente invention peut être utilisé seul pour la fabrication du voile de la roue ou recevoir des renforts supplémentaires.

Selon un mode de réalisation, des renforts tissés peuvent être intégrés à la présente invention afin d'en accroître la résistance mécanique.

De manière avantageuse, le dispositif selon la présente invention peut être relié à tout type de jante et être connecté en tout point de la jante par tout moyen, mécanique, par collage, par soudage ou par intégration des renforts du voile organisés dans la construction d'une roue ou d'une partie de roue composite.

La présente invention concerne aussi un ensemble d'au moins un premier dispositif selon la présente invention et d'au moins un deuxième dispositif selon la présente invention, le premier dispositif et le deuxième dispositif étant solidaires l'un de l'autre au niveau d'au moins une zone de solidarisation.

Cela forme un ensemble tridimensionnel, et permet ainsi une meilleure répartition des efforts mécaniques entre les deux dispositifs.

La présente invention concerne en outre un procédé de fabrication d'au moins un dispositif selon la présente invention comprenant au moins les étapes suivantes :
∘ Positionnement de la première nappe selon le premier axe d'extension de sorte à définir au moins un premier axe de rayonnage de la roue, de préférence le premier axe de rayonnage de la roue définissant au moins un premier axe de rayonnage de la roue ;Positionnement de la deuxième nappe selon le deuxième axe d'extension, différent du premier axe d'extension, de sorte à définir au moins un deuxième axe de rayonnage de la roue différent du premier axe de rayonnage de la roue et de sorte à superposer une portion au moins de la deuxième nappe avec une portion de la première nappe au niveau de la zone centrale, de préférence le deuxième axe de rayonnage définissant au moins un deuxième axe de rayonnage de la roue.

La présente invention concerne enfin une machine de mise en œuvre du procédé selon la présente invention comprenant au moins :
∘ un cadre comprenant une partie centrale et une partie périphérique et supportant au moins :
   - un premier bras mobile, de préférence en rotation, s'étendant selon une direction orthogonale au premier axe d'extension et étant destiné à porter au moins une première bobine comprenant un enroulement de la première nappe, l'enroulement de la première nappe étant réalisé selon un axe orthogonal au premier axe d'extension ;
   - un deuxième bras mobile, de préférence en rotation, s'étendant selon une direction orthogonale au deuxième axe d'extension et étant destiné à porter au moins une deuxième bobine comprenant un enroulement de la deuxième nappe, l'enroulement de la deuxième nappe étant réalisé selon un axe orthogonal au deuxième axe d'extension ;
∘ le premier bras mobile étant configuré pour dérouler la première nappe selon le premier axe d'extension dans la partie périphérique et dans la partie centrale du cadre ;
∘ le deuxième bras mobile étant configuré pour dérouler la deuxième nappe selon le deuxième axe d'extension dans la partie périphérique et dans la partie centrale du cadre de sorte à superposer une portion au moins de la deuxième nappe avec une portion de la première nappe au niveau de la partie centrale du cadre.

Cela permet de fabriquer les voiles de roue à des niveaux de production de masse.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- La figure 1 illustre une roue comprenant un support d'un moyeu, un voile et une jante selon un mode de réalisation de la présente invention.
- Les figures 2a, 2b et 2c illustrent une vue de profil de dispositifs selon trois modes de réalisation de la présente invention illustrant la superposition des nappes.
- Les figures 3a à 3d illustrent différents modes de réalisation de la présente invention, en particulier relativement à l'agencement de différentes nappes.
- La figure 4 illustre un agencement de trois nappes ainsi que leurs axes principaux d'extension respectifs selon un mode de réalisation de la présente invention.
- La figure 5 illustre un dispositif selon un mode de réalisation de la présente invention dans lequel une partie de chaque nappe a été retirée, par exemple par découpe, afin de réduire le poids du dispositif, de préférence en optimisant la quantité de matériau par zone.
- Les figures 6a à 6e illustrent différents modes de réalisation de la présente invention dans lesquels une partie du dispositif est déformé par exemple par emboutissage.
- Les figures 7a à 7j illustrent différents modes de réalisation d'un ensemble de deux dispositifs selon la présente invention avec une jante.
- Les figures 8a et 8b illustrent deux modes de réalisation de montage d'un support d'un moyeu dans le cas d'un ensemble selon la présente invention.
- Les figures 9a à 9g illustrent différents modes de réalisation d'une jonction entre un ensemble selon la présente invention et une jante, pouvant être en deux parties.
- La figure 10 représente une machine de mise en œuvre d'un procédé de fabrication selon un mode de réalisation de la présente invention.
- Les figures 11a, 11b et 11c représentent une machine de mise en œuvre d'un procédé de fabrication selon un autre mode de réalisation de la présente invention.
- La figure 12 montre un exemple de section du dispositif de l'invention, impliquant différentes zones formées à partir des nappes.

Les dessins joints sont donnés à titre d'exemples et ne sont pas limitatifs de l'invention. Ces dessins sont des représentations schématiques et ne sont pas nécessairement à l'échelle de l'application pratique.

### DESCRIPTION DETAILLEE DE L'INVENTION

Il est précisé que dans le cadre de la présente invention, le terme « zone centrale », ou ses équivalents ont pour définition une zone comprenant l'empilement multidirectionnel et de préférence l'axe de rotation de la roue, voire le support du moyeu pouvant ou non comprendre le moyeu lui-même.

Il est précisé que dans le cadre de la présente invention, le terme « zone périphérique », ou ses équivalents ont pour définition une zone entourant au moins en partie la zone centrale. De manière plus géométrique, la zone périphérique est définie par la zone s'étendant depuis la zone centrale vers la jante. C'est la zone périphérique qui assure la liaison mécanique entre la zone centrale et la jante.

Il est précisé que dans le cadre de la présente invention, le terme « composite » ou ses équivalents se comprend comme étant le mélange dans des proportions et avec une répartition définie de deux matériaux non miscibles, comme par exemple un renfort et une matrice, ou encore un faisceau unidirectionnel de fibres et une matrice.

Il est précisé que dans le cadre de la présente invention, le terme « nappe » un élément présentant une direction principale d'extension, une direction secondaire d'extension, orthogonale à la direction principale, et une épaisseur. La dimension spatiale de la nappe selon sa direction principale d'extension correspond à sa longueur. La dimension spatiale de la nappe selon sa direction secondaire d'extension correspond à sa largeur. Une nappe est définie comme ayant une longueur supérieure à sa largeur, et une largeur supérieure à son épaisseur.

Une nappe peut comprendre matériau composite formé par au moins un faisceau de fibres dans une matrice, de préférence le faisceau de fibres étant unidirectionnel.

Une nappe peut comprendre des fibres disposées dans au moins une matrice, chaque fibre présentant une dimension géométrique principale, cette direction géométrique principale étant de préférence, mais non limitativement, orientée selon la direction principale d'extension de la nappe, c'est-à-dire de préférence selon sa longueur.

Il est précisé que dans le cadre de la présente invention, les termes « axe de rayonnage », « rayon », ou leurs équivalents ont pour définition un élément mécanique s'étendant depuis la jante vers la zone centrale. Un axe de rayonnage est défini comme une portion de nappe ou de tissu s'étendant dans la zone périphérique entre la zone centrale et la jante. Avantageusement, la dimension longitudinale de la nappe est dirigée suivant la longueur de l'axe de rayonnage.

Il est précisé que dans le cadre de la présente invention, le terme « effet de triangulation », ou ses équivalents ont pour définition une formation mécanique triangulaire destinée à décomposer un vecteur force en une pluralité de vecteur forces de moindre intensité. En particulier un effet de triangulation consiste à répartir sur deux côtés d'un triangle un effort mécanique appliqué au sommet commun à ces deux côtés.

Il est précisé que le cadre de la présente invention, le terme « superposition sur elle-même» ou « empilement sur elle-même » ou « repliement sur elle-même » ou leurs équivalents ont pour définition une superposition d'une nappe avec elle-même, c'est-à-dire d'une première portion d'une nappe avec une deuxième portion de cette même nappe sans impliquer que ladite nappe soit en contact avec elle-même suite à cette superposition et sans impliquer nécessairement une continuité de matière entre la première portion de nappe superposée à la deuxième portion de la même nappe, avantageusement, cela inclut également le cas où la nappe est sectionnée en deux portions, l'une étant superposée à l'autre.

Il est précisé que dans le cadre de la présente invention, les termes « au-dessus », « sur », « surmonte », « recouvre » ou « sous-jacent » ou leurs équivalents ne signifient pas « au contact de ». Par exemple, une première nappe disposée au-dessus d'une deuxième nappe ne signifie pas obligatoirement que les deux nappes sont directement au contact l'une de l'autre, mais cela signifie que la première nappe recouvre au moins partiellement la deuxième nappe en étant soit directement à son contact soit en étant séparée d'elle par au moins une autre nappe ou au moins un autre élément.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif.

Dans la description qui suit, des numéros de référence similaires seront utilisés pour décrire des concepts similaires à travers des modes de réalisation différents de l'invention.

Avant d'entamer une revue détaillée de modes de réalisation de l'invention, sont énoncées ci-après des caractéristiques optionnelles qui peuvent éventuellement être utilisées en association ou alternativement :
- Avantageusement, une partie au moins des fibres du premier faisceau unidirectionnel sont, en partie au moins, imprégnées d'au moins une résine thermodurcissable et/ou thermoplastique, et/ou dans lequel une partie au moins des fibres du deuxième faisceau unidirectionnel sont, en partie au moins, imprégnées d'au moins une résine thermodurcissable et/ou thermoplastique.
- Avantageusement, les fibres peuvent être pré-imprégnées ou imprégnées pendant le procédé de fabrication.
- Avantageusement, au moins une partie des fibres du premier faisceau unidirectionnel comprend au moins l'un des matériaux pris parmi : métal, verre, carbone, aramide, bore, titane, et plus généralement tout matériau constituant un renfort qu'il est possible de noyer dans une matrice en respectant une répartition et des proportions convenables pour obtenir un matériau composite optimisé et/ou au moins une partie des fibres du deuxième faisceau unidirectionnel comprend au moins l'un des matériaux pris parmi : métal, verre, aramide, carbone, bore, titane et plus généralement tout matériau constituant un renfort qu'il est possible de noyer dans une matrice en respectant une répartition et des proportions convenables pour obtenir un matériau composite optimisé.

Cela permet de disposer de fibres présentant un très bon rapport entre leurs propriétés mécaniques en traction et leur poids.

Cela permet de fabriquer des axes de rayonnage de roues légers et résistants mécaniquement.
- Avantageusement, la zone centrale présente un poids plus important que la zone périphérique.
- Avantageusement, la zone centrale présente une construction et des propriétés mécaniques différentes de la zone périphérique.
- Avantageusement, la première portion et la deuxième portion sont formées par alternance de premières et deuxièmes nappes qui sont superposées l'une relativement à l'autre selon un ordre prédéterminé, également appelé cadencement.
- Avantageusement, l'empilement multidirectionnel comprend un empilement ordonné selon un ordre prédéterminé d'une partie de la première nappe et d'une partie de la deuxième nappe.
- Avantageusement, la zone centrale comprend le support du moyeu.
- Avantageusement, la zone centrale comprend le moyeu de la roue.
- Avantageusement, le support du moyeu comprend le moyeu de la roue.
- Avantageusement, la première nappe et la deuxième nappe sont disposées au niveau de la zone centrale de sorte à définir un emplacement du support du moyeu de la roue.
- Avantageusement, le dispositif comprend au moins un renfort structurel additionnel, de préférence sous la forme d'un renfort tissé, par exemple unidirectionnel ou multidirectionnel, ou d'un renfort multiaxial, introduit entre au moins la première nappe et la deuxième nappe, de préférence au niveau de la zone centrale et/ou de la zone permettant d'effectuer la jonction avec la jante et/ou la constitution d'une partie de la jante liée au voile de roue
- Avantageusement, une partie au moins de la première nappe forme en partie au moins un premier axe de rayonnage de la roue s'étendant principalement selon le premier axe d'extension.
- Avantageusement, une partie au moins de la deuxième nappe forme en partie au moins un deuxième axe de rayonnage de la roue s'étendant principalement selon le deuxième axe d'extension.
- Avantageusement, la zone périphérique relie mécaniquement la jante de la roue à la zone centrale.
- Avantageusement, le premier axe de rayonnage et le deuxième axe de rayonnage relient mécaniquement la jante de la roue à la zone centrale..
- Avantageusement, le premier axe d'extension et le deuxième axe d'extension sont tous deux orthogonaux relativement à l'axe de rotation de la roue.
- Avantageusement, l'empilement multidirectionnel comprend au moins un renfort multidirectionnel disposé entre au moins la première nappe et la deuxième nappe, de préférence, le renfort multidirectionnel étant précontraint.
- Avantageusement, la zone périphérique comprend au moins une portion périphérique configurée pour former au moins en partie une portion de la jante.
- Avantageusement, ladite portion de la jante formée par la portion périphérique comprend au moins l'une parmi : une partie du fond de la jante, une partie d'au moins un talon de la jante, une partie d'au moins un rebord de la jante.
- Avantageusement, la zone périphérique comprend au moins une portion périphérique configurée pour former au moins en partie une portion de la jante comprenant au moins l'une parmi : une partie du fond de la jante, une partie d'au moins un talon de la jante, une partie d'au moins un rebord de la jante.
- Avantageusement, au moins une portion de la première et/ou de la deuxième nappe au niveau de la zone périphérique est inclinée et/ou courbée relativement à un plan comprenant le premier et le deuxième axe d'extension.

Cela permet de modifier les propriétés mécaniques de la roue en fonction des besoins et de régler sa rigidité ou sa souplesse selon certains axes prédéterminés.

Cela permet d'accroître la résistance mécanique de la roue.

Cela permet d'assurer un déport de la jante par rapport au support du moyeu de la roue tout en conservant une liberté de forme des axes de rayonnage de la roue dans le but d'optimiser la raideur de la roue.

Cela permet de contrôler la souplesse de la roue et de l'ajuster aux contraintes de fonctionnement.
- Avantageusement, au moins une portion du premier axe de rayonnage et/ou du deuxième axe de rayonnage au niveau de la zone périphérique est inclinée et/ou courbée relativement à un plan comprenant le premier et le deuxième axe d'extension. Cela permet de modifier les propriétés mécaniques de la roue en fonction des besoins et de régler sa rigidité ou sa souplesse selon certains axes prédéterminés.

Cela permet d'accroître la résistance mécanique de la roue.

Cela permet d'assurer un déport de la jante par rapport au support du moyeu de la roue tout en conservant une liberté de forme des axes de rayonnage de la roue dans le but d'optimiser la raideur de la roue.

Cela permet de contrôler la souplesse de la roue et de l'ajuster aux contraintes de fonctionnement.
- Avantageusement, le dispositif selon présente invention comprend au moins une troisième portion comprenant au moins une troisième nappe d'au moins un troisième matériau composite formé par un troisième faisceau unidirectionnel de fibres dans une matrice et s'étendant dans la zone périphérique et dans la zone centrale selon un troisième axe d'extension, le troisième axe d'extension étant différent du premier axe d'extension et du deuxième axe d'extension, la première portion, la deuxième portion et la troisième portion étant superposées les unes relativement aux autres au niveau de la zone centrale.
- Avantageusement, la zone de solidarisation est prise parmi au moins : une partie de la zone centrale du premier et/ou deuxième dispositif, une partie de la zone périphérique du premier et/ou deuxième dispositif, une partie de la première portion du premier et/ou deuxième dispositif, une partie de la deuxième portion du premier et/ou deuxième dispositif.
- Avantageusement, la zone périphérique du premier dispositif et la zone périphérique du deuxième dispositif sont disposées parallèlement l'une relativement à l'autre.
- Avantageusement, la zone de solidarisation comprend un élément de solidarisation.
- Avantageusement, l'élément de solidarisation comprend un axe disposé au niveau de l'axe de rotation de la roue.
- Avantageusement, le premier dispositif et le deuxième dispositif sont maintenus solidaires entre eux par au moins un élément de solidarisation.
- Avantageusement, l'élément de solidarisation comprend une entretoise disposée au niveau de l'axe de rotation de la roue.
- Avantageusement, l'élément de solidarisation comprend une première pièce et une deuxième pièce disposées au niveau de l'axe de rotation de la roue respectivement de part et d'autre de la roue.
- Avantageusement, l'élément de solidarisation comprend une entretoise disposée entre le premier dispositif et le deuxième dispositif.
- Avantageusement, l'élément de solidarisation comprend une entretoise disposée entre le premier dispositif et le deuxième dispositif, et une première pièce et une deuxième pièce disposées au niveau de l'axe de rotation de la roue respectivement de part et d'autre de la roue, de préférence formant un support pour le moyeu et/ou comprenant le moyeu.
- Avantageusement, l'élément de solidarisation comprend la jante de la roue.
- Selon un mode de réalisation, la zone centrale du premier dispositif et la zone centrale du deuxième dispositif peuvent présenter un espacement relatif inférieur à l'espacement présenté par la zone périphérique du premier dispositif relativement à la zone périphérique du deuxième dispositif.
- Selon un autre mode de réalisation, la zone centrale du premier dispositif et la zone centrale du deuxième dispositif peuvent présenter un espacement relatif supérieur à l'espacement présenté par la zone périphérique du premier dispositif relativement à la zone périphérique du deuxième dispositif.
- Selon encore un autre mode de réalisation, la zone centrale du premier dispositif et la zone centrale du deuxième dispositif peuvent présenter un espacement relatif égal à l'espacement présenté par la zone périphérique du premier dispositif relativement à la zone périphérique du deuxième dispositif.
- Avantageusement, le premier dispositif comprend au moins une première partie de la jante de la roue.
- Avantageusement, le premier dispositif comprend au moins une deuxième partie de la jante de la roue.
- Avantageusement, la jante de la roue est formée par la première partie de la jante et par la deuxième partie de la jante.
- Avantageusement, le procédé selon la présente invention comprend en outre au moins les étapes suivantes :
   ∘ Repliement de la première nappe sur elle-même en la superposant à la deuxième nappe au niveau de la zone centrale et à elle-même au niveau de la zone périphérique ;
   ∘ Repliement de la deuxième nappe sur elle-même en la superposant à la première nappe au niveau de la zone centrale et à elle-même au niveau de la zone périphérique.
- Avantageusement, le procédé selon la présente invention comprend en outre au moins les étapes suivantes :
   ∘ Empilement de la première nappe sur elle-même en la superposant à la deuxième nappe au niveau de la zone centrale et à elle-même au niveau de la zone périphérique ;
   ∘ Empilement de la deuxième nappe sur elle-même en la superposant à la première nappe au niveau de la zone centrale et à elle-même au niveau de la zone périphérique.
- Avantageusement, le procédé selon la présente invention comprend en outre au moins les étapes suivantes :
   ∘ Superposition de la première nappe sur elle-même en la superposant à la deuxième nappe au niveau de la zone centrale et à elle-même au niveau de la zone périphérique ;
   ∘ Superposition de la deuxième nappe sur elle-même en la superposant à la première nappe au niveau de la zone centrale et à elle-même au niveau de la zone périphérique.
- Avantageusement, le procédé selon la présente invention comprend au moins une étape de découpe d'une portion au moins de la première nappe au niveau de la zone périphérique de sorte à former une première pluralité d'axes de rayonnage de la roue à partir de la première nappe, et/ou comprenant au moins une étape de découpe d'une portion au moins de la deuxième nappe au niveau de la zone périphérique de sorte à former une deuxième pluralité d'axes de rayonnage de la roue à partir de la deuxième nappe.
- Avantageusement, le procédé selon la présente invention comprend au moins une étape de découpe d'une portion au moins de la première nappe au niveau du premier axe de rayonnage de sorte à former une première pluralité d'axes de rayonnage de la roue à partir au moins un premier axe de rayonnage.
- Avantageusement, le procédé selon la présente invention comprend au moins une étape de découpe d'une portion au moins de la deuxième nappe au niveau du deuxième axe de rayonnage de sorte à former une deuxième pluralité d'axes de rayonnage de la roue à partir au moins du deuxième axe de rayonnage.
- Avantageusement, le procédé selon la présente invention comprend au moins une étape d'emboutissage, également appelée étape de mise en forme, configurée pour déformer au moins une portion de la première et/ou de la deuxième nappe. Cette étape peut être manuelle avant passage en machine ou automatique, par exemple si le drapage est effectué sur une forme.

Cela permet de contrôler la souplesse de la roue et de l'ajuster aux contraintes de fonctionnement.

Cela permet d'assurer un déport de la jante par rapport au support du moyeu de la roue tout en conservant une liberté de forme des axes de rayonnage de la roue dans le but d'optimiser la raideur de la roue.
- Avantageusement, le procédé selon la présente invention comprend au moins une étape d'emboutissage comprenant au moins la déformation d'une portion de la première et/ou de la deuxième nappe au niveau de la zone périphérique de sorte à incliner au moins l'un parmi le premier axe de rayonnage et le deuxième axe de rayonnage relativement à un plan comprenant le premier et le deuxième axe d'extension.
- Avantageusement, le procédé selon la présente invention comprend au moins une étape de mise en forme dans le sens axial comprenant au moins la déformation d'une portion de la première et/ou de la deuxième nappe au niveau de la zone périphérique de sorte à incliner au moins l'un parmi le premier axe de rayonnage et le deuxième axe de rayonnage relativement à un plan comprenant le premier et le deuxième axe d'extension.
- Avantageusement, le procédé selon la présente invention comprend au moins une étape de formation d'une partie au moins de la jante de la roue par enroulement d'au moins une nappe additionnelle autour de la zone périphérique relativement à l'axe de rotation de la roue.
- Avantageusement, le cadre supporte en outre au moins :
   ∘ un premier bras fixe s'étendant selon une direction parallèle au premier bras mobile ;
   ∘ un premier bras de butée s'étendant selon une direction parallèle au premier bras mobile, le premier bras fixe et le premier bras de butée étant disposés de part et d'autre de la partie centrale ;
   ∘ un deuxième bras fixe s'étendant selon une direction parallèle au deuxième bras mobile ;
   ∘ un deuxième de butée s'étendant selon une direction parallèle au deuxième bras mobile, le deuxième bras fixe et le deuxième bras de butée étant disposés de part et d'autre de la partie centrale ;
   ∘ le premier bras mobile étant configuré pour dérouler la première nappe selon le premier axe d'extension depuis le premier bras fixe jusqu'au premier bras de butée ;
   ∘ le deuxième bras mobile étant configuré pour dérouler la deuxième nappe selon le deuxième axe d'extension depuis le deuxième bras fixe jusqu'au deuxième bras de butée.
- Avantageusement, le premier bras mobile est configuré, en outre, pour dérouler la première nappe selon le premier axe d'extension depuis le premier bras de butée jusqu'au premier bras fixe de sorte à superposer une portion au moins de la première nappe avec une portion de la deuxième nappe au niveau de la partie centrale du cadre, et/ou dans laquelle le deuxième bras mobile est configuré pour dérouler la deuxième nappe selon le deuxième axe d'extension depuis le deuxième bras de butée jusqu'au deuxième bras fixe de sorte à superposer une portion au moins de la deuxième nappe avec une portion de la première nappe au niveau de la partie centrale du cadre.
- Avantageusement, le cadre comprend en outre au moins :
   ∘ Une première pièce de support du premier bras mobile s'étendant de préférence selon un axe d'extension orthogonal au premier axe d'extension ;
   ∘ Une deuxième pièce de support du deuxième bras mobile s'étendant de préférence selon un axe d'extension orthogonal au deuxième axe d'extension.

La présente invention trouve pour domaine préférentiel d'application les roues de véhicules, comme par exemple de motocyclettes ou de voitures.

La présente invention concerne un dispositif apte à former au moins en partie un voile de roue à partir de matériaux composites. Pour la suite de cette description, le dispositif selon la présente invention pourra être appelé indifféremment dispositif ou voile de roue.

La présente invention, comme cela sera décrit par la suite, utilise astucieusement l'anisotropie des matériaux composites pour réduire le poids de la roue tout en maintenant une résistante mécanique au moins identique à celle d'une roue métallique.

En choisissant adroitement et en disposant avec astuce des faisceaux unidirectionnels de fibres unidirectionnelles enchâssées dans une matrice, la présente invention permet de réduire drastiquement le poids d'une roue tout en conservant une résistance mécanique aux différents efforts mécaniques que peut subir une roue suffisante.

Lors du développement de la présente invention, il a été observé une anisotropie au niveau de la répartition spatiale des efforts mécaniques supportés par une roue. Ainsi, la présente invention a été développée en tenant compte de cette anisotropie d'efforts entre, par exemple, la zone centrale d'une roue et sa zone périphérique. En réponse à cette anisotropie, la présente invention dispose de manière anisotrope des structures de soutien mécaniques particulièrement adaptées pour le type d'efforts considérés.

Ainsi, la zone périphérique, sujette à des efforts en traction, comprend de manière avantageuse, des faisceaux unidirectionnels de fibres dont la direction d'extension principale est colinéaire à la force de traction subite dans cette zone.

De manière similaire, la zone centrale subissant de nombreuses forces anisotropes, cela résulte en une force sensiblement isotrope, ainsi, c'est par l'empilement de faisceaux unidirectionnels de fibres que la présente invention permet de supporter ces efforts au niveau de la zone centrale.

De manière avantageuse et comme décrit par la suite, le dispositif selon la présente invention permet la formation d'une partie ou de la totalité d'un voile pouvant être relié à tout type de jante et être connecté en tout point de la jante par tout moyen, mécanique, par collage, par soudage ou par intégration de renforts audit voile ou être prolongé pour constituer une partie de la jante.

Selon un mode de réalisation, le dispositif selon la présente invention permet la formation d'une partie ou de la totalité d'un voile pouvant être prolongé pour constituer au moins une partie de la jante, voire la totalité de la jante.

Selon un mode de réalisation, le dispositif selon la présente invention peut être utilisé comme un tout fonctionnel pour constituer un voile de roue ou être inclus dans une construction de voile de roue comme un élément apportant des qualités mécaniques propres à un ensemble dans lequel d'autres éléments participent à l'obtention de toutes les qualités souhaitées dans le voile final.

Afin de parvenir à ce résultat, la présente invention concerne également un procédé de fabrication et une machine de mise en œuvre d'un tel procédé. En particulier, cette machine, décrite par la suite, permet d'atteindre des vitesses de production de masse afin de répondre à une application industrielle de la présente invention.

Enfin, selon un aspect de la présente invention décrit par la suite, un ensemble de deux voiles peut être considéré pour former un voile final de roue bénéficiant des caractéristiques mécaniques de chaque dispositif, c'est-à-dire de chaque voile, le composant.

Nous allons à présent décrire la présente invention selon divers modes de réalisation au travers de différentes figures. Nous commencerons par une description du dispositif selon la présente invention configuré pour former en partie au moins un voile de roue, puis par une description du procédé de fabrication dudit dispositif, suivie par la description de la machine de mise en œuvre dudit procédé. Nous terminerons par une présentation de paramètres pouvant, à titre d'exemple non limitatif, être utilisés pour la mise en œuvre de la présente invention.

### ➢ Dispositif selon la présente invention :

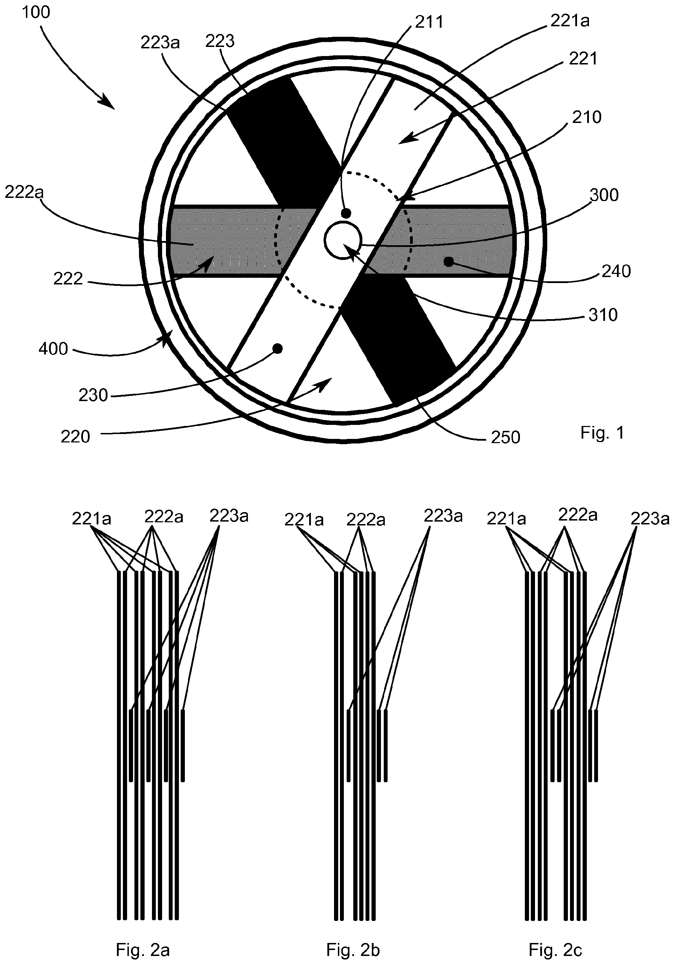

La figure 1 représente une vue de profil d'une roue 100 comprenant un voile 200 selon un mode de réalisation de la présente invention portant un support d'un moyeu 300 et une jante 400.

Sur cette figure, le voile 200 présente une zone centrale 210 et une zone périphérique 220. De plus le voile 200 comprend six axes de rayonnage 230, 240 et 250 formés à partir de trois nappes 221a, 222a, 223a de matériaux composites.

Selon un mode de réalisation, chaque nappe parmi la première 221a, la deuxième 222a et la troisième 223a s'étend dans la zone périphérique 220 et dans la zone centrale 210, de préférence définissant chacune un diamètre de la roue, et par exemple les six axes de rayonnage 230, 240 et 250 de la roue 100 de la figure 1.

On remarque sur cette figure que la première nappe 221a est disposée au-dessus de la deuxième 222a et de la troisième 223a nappes. De même, la deuxième nappe 222a est disposée au-dessus de la troisième nappe 223a. En effet, de manière avantageuse, et selon un mode préféré de réalisation, les nappes 221a, 222a, 223a sont disposées de sorte qu'une partie de chacune d'elles au moins soient superposées aux autres au niveau de la zone centrale 210 y formant ainsi un empilement multidirectionnel 211.

Les premières et deuxièmes portions, et éventuellement la ou les troisièmes portions, sont donc intriquées.

Selon un mode de réalisation décrit ci-après, les nappes 221a, 222a, 223a peuvent être repliées sur elle-même en contournant les autres nappes 221a, 222a, 223a de sorte à former une boucle et à définir un même diamètre sur au moins deux niveaux.

Ainsi, la première nappe 221a forme deux premiers axes de rayonnage 230 et cela potentiellement sur plusieurs niveaux, il en est de même pour la deuxième 222a et la troisième nappe 223a.

Avantageusement, la zone hors du croisement des faisceaux unidirectionnels de fibres, c'est-à-dire la zone périphérique 220, comprend des axes de rayonnage de fibres unidirectionnelles reliant le voile 200 à la jante 400 et optimisant la reprise de l'effort dans cette zone et avantageusement le poids de cette zone.

Selon un autre mode de réalisation, les nappes 221a, 222a, 223a peuvent être superposées les unes aux autres, avec par exemple l'intercalage d'éléments de renforts entre les nappes 221a, 222a, 223a.

Les figures 2a, 2b et 2c représentent trois modes de réalisation d'empilement des première 221a, deuxième 222a et troisième 223a nappes.

On notera que ces trois figures sont des vues de profil d'un voile selon la présente invention.

On note également que la séquence d'empilement, autrement appelée cadence, peut être différente entre plusieurs modes de réalisation.

Selon un premier mode de réalisation, les nappes 221a, 222a, 223a peuvent être repliées sur elle-même de sorte à entourer une ou plusieurs autres nappes 221a, 222a, 223a.

Selon un deuxième mode de réalisation, les nappes peuvent être chacune disposées par couches successives sans nécessiter de repliement sur elle-même.

Par exemple un diamètre peut être formé par la troisième nappe 223a, puis la deuxième nappe 222a est disposée, suivie d'une troisième nappe additionnelle 223a superposée en partie au moins à la troisième nappe 223a et superposée en partie à la deuxième nappe 222a. Puis une deuxième nappe additionnelle 222a peut venir se superposer en partie au moins à la deuxième nappe 222a et à la troisième nappe additionnelle 223a, et ainsi de suite de sorte à réaliser un empilement de nappes 221a, 222a, 223a sans repliement sur elle-même.

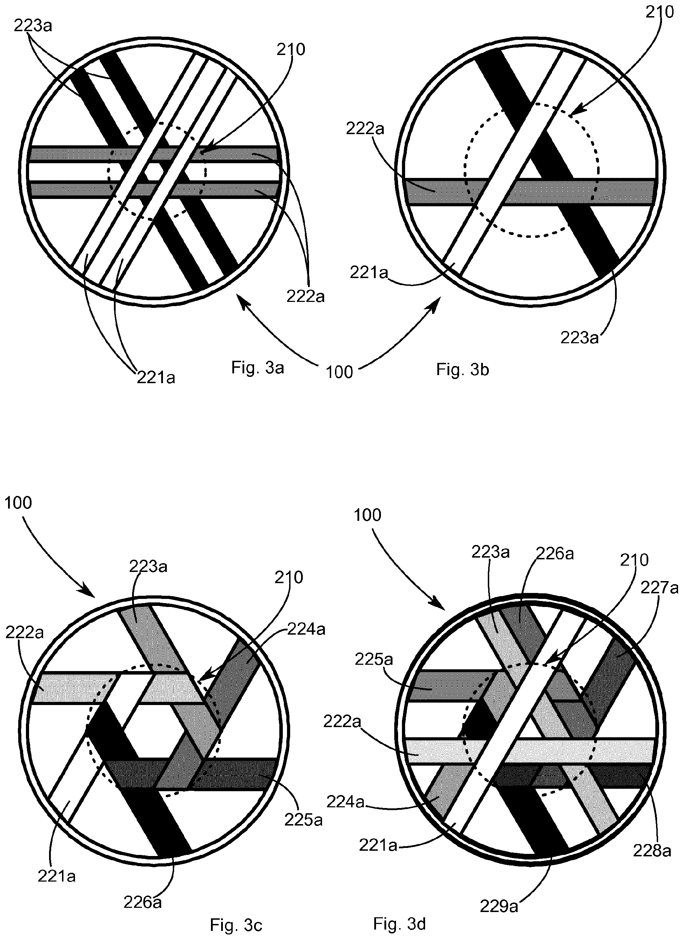

Les figures 3a, 3b, 3c et 3d représentent quatre modes de réalisation servant d'exemples pour illustrer différents positionnements et enchevêtrements de nappes 221a, 222a, 223a pour former le dispositif 200 selon la présente invention. La disposition des nappes 221a, 222a, 223a les unes relativement aux autres pourra également être appelée drapage dans la suite de la description.

Ainsi ces quatre figures représentent quatre drapages distincts.

Dans la figure 1 précédente, les nappes 221a, 222a, 223a passent toutes par l'axe de rotation 310 de la roue 100. Autrement dit la direction d'extension de chaque nappe 221a, 222a, 223a se trouve être selon un axe orthogonal à l'axe de rotation 310 de la roue 100.

Selon un mode de réalisation, la première nappe 221a s'étend selon un premier axe d'extension 231, la deuxième nappe 222a selon un deuxième axe d'extension 241 et la troisième nappe 223a selon un troisième axe d'extension 251.

On notera que selon le mode de réalisation de la figure 1, les premier 231, deuxième 241 et troisième 251 axes d'extension sont agencés de manière à définir des sections d'angles égales entre chaque axe d'extension.

Selon un autre mode de réalisation non représenté, les premier 231, deuxième 241 et troisième 251 axes d'extension sont agencés de manière à définir au moins une section d'angle inégale relativement à au moins une autre section d'angle.

La figure 3a représente une disposition sensiblement similaire à celle de la figure 1 à l'exception près que la première nappe 221a comprend deux parties distinctes disposées parallèlement l'une de l'autre relativement à un diamètre de la roue 100 selon ledit premier axe d'extension 231.

Il en est ainsi de même pour les deuxième 222a et troisième 223a nappes selon leurs axes d'extension respectifs 241 et 251. Cette configuration des nappes 221a, 222a, 223a permet de définir géométriquement le centre de la roue 100 par lequel l'axe de rotation 310 de celle-ci passe. Cela permet également d'aménager un espace au centre de la zone centrale 210 pour le positionnement et/ou la formation d'un support de moyeu 300 de la roue 100.

La figure 3b représente un cas où les nappes 221a, 222a, 223a sont disposées de sorte à contourner le centre de la roue 100. Elles n'interceptent pas le centre géométrique de la roue 100. Par exemple, les nappes 221a, 222a, 223a peuvent être disposées de sorte à être tangentes au centre. Selon ce mode de réalisation, les nappes 221a, 222a, 223a sont disposées de manière à être décalées chacune relativement à un diamètre différent.

La figure 3c représente un mode de réalisation dans lequel les nappes 221a, 222a, 223a, 224a, 225a et 226a ne définissent pas de diamètre, mais sont tissées les unes relativement aux autres. Avantageusement chaque nappe est supportée par deux nappes contiguës et supporte également ces deux nappes contiguës.

En effet, selon ce mode de réalisation, les nappes 221a, 222a, 223a, 224a, 225a et 226a sont disposées de sorte à ne pas être traversantes relativement à la zone centrale 210.

Selon ce mode de réalisation, chaque nappe 221a, 222a, 223a, 224a, 225a et 226a est mécaniquement solidaire de deux nappes contiguës.

Au travers de ces trois figures, on peut établir de manière avantageuse que chaque nappe est une homothétie de la première nappe 221a relativement à l'axe de rotation 310 de la roue 100.

De préférence, la deuxième nappe 222a est disposée selon un deuxième axe d'extension 241 qui se trouve être l'image du premier axe d'extension 231 selon une rotation de 60 degrés autour de l'axe de rotation 310.

Et la troisième nappe 223a est disposée selon un troisième axe d'extension 251 qui se trouve être l'image du premier axe d'extension 231 selon une rotation de 120 degrés autour de l'axe de rotation 310 de la roue 100, ou du deuxième axe d'extension 241 selon une rotation de 60 degrés autour de l'axe de rotation 310 de la roue 100.

La figure 3d représente un mode de réalisation fruit d'une combinaison de ceux des figures 3b et 3c. En effet, cette figure illustre un drapage qui est une combinaison de deux types de drapage. D'autres types de drapages sont possibles.

De manière avantageuse, chaque drapage respecte une symétrie de positionnement relatif des nappes afin de satisfaire au mieux la contrainte de symétrie de révolution de la roue 100.

De préférence, les nappes sont disposées de sorte à définir des sections angulaires égales les unes aux autres.

Avantageusement, chaque nappe comprend au moins un faisceau unidirectionnel de fibres dont la dimension principale d'extension est colinéaire à celle de ladite nappe le comprenant.

Ainsi, le dispositif 200 selon la présente invention comprend une zone centrale 210 comprenant au moins la superposition cadencée, sur de préférence un tour, de faisceaux unidirectionnels de fibres dont l'axe d'extension tourne perpendiculairement à l'axe de rotation 310 de la roue 100. Les faisceaux unidirectionnels de fibres passent ou non par le centre du dispositif, c'est-à-dire par exemple par le support du moyeu 300 si celui-ci coïncide avec le centre de la roue 100.

De préférence, les faisceaux unidirectionnels de fibres peuvent aller d'un point à un autre du périmètre du voile 200, passant ou non par son centre, ou aller d'un point du périmètre jusqu'à un cercle concentrique au voile 200 à l'intérieur de celui-ci au niveau de la zone centrale 210 ; la seule condition étant qu'il croise au moins un autre faisceau unidirectionnel de fibres de manière à définir l'empilement multidirectionnel 211, c'est-à-dire une zone de superposition de faisceaux unidirectionnels de fibres et donc de nappes.

Les faisceaux unidirectionnels de fibres dans les nappes peuvent être disposés de telle sorte qu'ils se croisent en respectant un cadencement, tout autant que le cadencement sur un certain nombre de tours est respecté.

Il convient de préférence que la disposition et la géométrie de chaque nappe 221a, 222a, 223a soient égales entre elles pour assurer un équilibre géométrique et mécanique au voile 200 ainsi formé.

De préférence, la présente invention permet de réaliser un voile 200 de roue 100 en matériaux composites avec au moins une zone centrale 210 présentant un empilement multidirectionnel 211 de faisceaux unidirectionnels de fibres, et cela sur la partie la plus contrainte mécaniquement du voile 200.

De même, la présente invention permet de réaliser un voile 200 de roue 100 en matériaux composites avec au moins une zone périphérique 220 comprenant des rayons de faisceaux unidirectionnels de fibres qui assurent la liaison entre le centre du voile 200 et la jante 400.

Ainsi, le voile 200 de la roue 100 présente une zone centrale 210 pouvant comprendre le support du moyeu 300 et une zone périphérique 220 comprenant les axes de rayonnage et le tout formant un élément monolithique ayant des caractéristiques mécaniques identiques ou supérieures à celles d'une roue à rayons assemblée.

Le dispositif 200 selon la présente invention peut être utilisé seul pour la fabrication d'un voile composite ou recevoir des renforts supplémentaires pour arriver au voile composite final. Selon un mode de réalisation, ce dispositif 200 peut également être intégré à une construction majoritairement constituée de renforts tissés pour en améliorer les caractéristiques.

Des renforts multidirectionnels ou tissés peuvent être introduits dans le cadencement des fibres unidirectionnelles, de préférence toujours en respectant une symétrie géométrique et mécanique relativement à l'axe de rotation 310 de la roue 100.

Il est à noter que selon un mode de réalisation, lesdits renforts multidirectionnels ou tissés peuvent être précontraints.

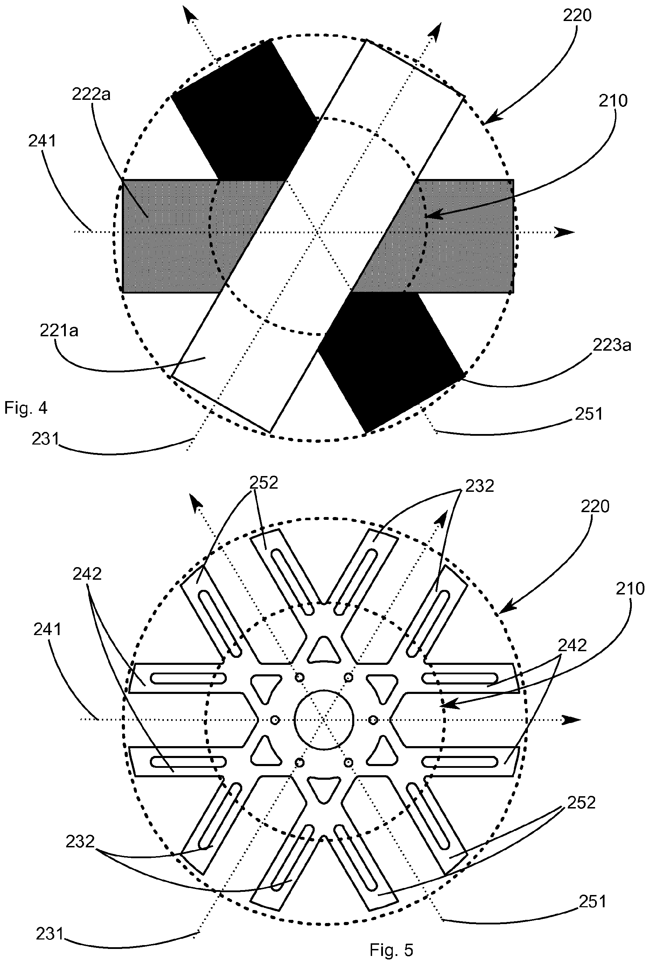

La figure 4 représente la superposition de trois nappes 221, 222a, 223a et leurs axes d'extension respectifs 231, 241, 251 selon lesquels elles s'étendent principalement. On note également sur cette figure la zone centrale 210 et la zone périphérique 220.

La figure 5 représente un dispositif 200 selon un mode de réalisation de la présente invention dans lequel une partie des nappes peut être retirée afin de réduire le poids de la structure finale tout en conservant ses propriétés mécaniques et géométriques. La découpe est ainsi, de préférence, faite de manière symétrique relativement à l'axe de rotation 310 de la roue 100.

Ainsi, le voile 200 de la roue 100 subissant une charge de travail d'autant moins importante que l'on s'éloigne du centre, il est possible d'enlever des parties des nappes, parties dites surabondantes, axe de rayonnage par axe de rayonnage et zone par zone, en fonction des caractéristiques que l'on souhaite pour le voile 200 ainsi formé. On obtient ainsi un voile 200 constitué d'une zone centrale 210 à forte résistance mécanique structurée selon une construction multidirectionnelle entrecroisée par étages et d'une zone périphérique 220 comprenant des axes de rayonnage en matériau unidirectionnel reliant mécaniquement cette zone centrale 210 à la jante 400 ou à la pièce permettant la liaison avec la jante 400.

Selon un mode de réalisation, on peut donc, par tout moyen, comme la découpe ou l'usinage par exemple, retirer l'excédent de matière dans le voile 200 pour l'optimiser zone par zone en fonction de la direction et de l'intensité de l'effort qui lui sera appliqué.

Le dispositif 200 ainsi obtenu peut être utilisé en l'état ou associé à d'autres renforts ou être usiné pour peu que, lors de l'enlèvement de matière, au moins un faisceau unidirectionnel de fibres ne soit pas sectionné intégralement après le dernier croisement entre la partie de ce faisceau unidirectionnel de fibres reliée à la jante 400 et un autre faisceau unidirectionnel de fibres de l'arrangement de faisceaux unidirectionnels de fibres.

Ainsi, selon ce mode de réalisation, le premier axe de rayonnage 230 donne naissance à une première pluralité d'axes de rayonnage 232 ; le deuxième axe de rayonnage 240 donne naissance à une deuxième pluralité d'axes de rayonnage 242 ; le troisième axe de rayonnage 250 donne naissance à une troisième pluralité d'axes de rayonnage 252.

Lors du développement de la présente invention, il a été observé que le dispositif 200 selon la présente invention peut voir ses caractéristiques mécaniques optimisées, particulièrement relativement à sa résistance mécanique par exemple dans un assemblage avec une jante 400 reliée à celui-ci au niveau des extrémités des axes de rayonnage du voile 200, quand l'axe des forces qui lui sont appliquées est dans un plan, ou le plus proche possible, d'un plan parallèle à l'axe principal d'extension des faisceaux unidirectionnels de fibres.

Néanmoins, relativement à l'art antérieur et pour de nombreuses raisons pratiques, on peut être amené à fabriquer un voile 200 qui ne soit pas plan, par exemple afin d'intégrer des éléments mécaniques dans le volume dégagé par la mise en forme, ou pour décaler l'axe des forces appliquées de l'axe des axes de rayonnage et obtenir ainsi une certaine souplesse de la construction finale de la roue 100.

Ainsi, selon un mode de réalisation de la présente invention, une partie au moins des axes de rayonnage peuvent être inclinés ou encore courbés relativement au plan dans lequel s'étend principalement la zone centrale 210, appelé plan principal. Cela permet par exemple aux faisceaux unidirectionnels de fibres présents au niveau de ces axes de rayonnage de se comporter mécaniquement comme des éléments de rappel, à l'image de ressorts.

Ainsi, si les axes de rayonnage sont conformés pour avoir une forme courbe, cela induit une souplesse dans le voile 200 et donc dans la roue 100. Cette souplesse est parfaitement maîtrisée puisque tous les paramètres mécaniques, en particulier ceux de l'élément de rappel, sont connus.

De plus, si l'élément de rappel comprenant les axes de rayonnage inclinés ou courbes atteint la forme rectiligne avant d'avoir atteint sa limite élastique, il est possible de gérer la réaction de la jante 400 sous l'effort mécanique entre le moment où les axes de rayonnage réagissent comme des ressorts et où la jante 400 a une certaine souplesse sous charge et le moment, à partir d'un certain niveau de charge, où le système devient rigide à l'optimum des propriétés en traction des fibres utilisées.

À titre d'exemple et selon un mode de réalisation issu de la figure 5, le voile 200 de roue peut présenter une géométrie particulière dans laquelle les axes de rayonnage sont parallèles entre eux dans chaque nappe et dans laquelle les croisements d'axes de rayonnage donnent naissance à un épaulement triangulaire 280.

Cet épaulement triangulaire 280 peut voir son orientation anglée lors de la mise en forme par emboutissage du voile 200. Cela permet d'assurer un déport de la jante 400 par rapport au support du moyeu 300 de la roue 100 tout en conservant une liberté de forme des axes de rayonnage dans le but d'optimiser la raideur de la roue 100.

L'emboutissage peut être indifféremment concave ou convexe tout autant que les propriétés mécaniques souhaitées sont obtenues par la conformation d'une partie au moins du voile 200 et de préférence d'une partie au moins des axes de rayonnage, c'est-à-dire de la zone périphérique 220.

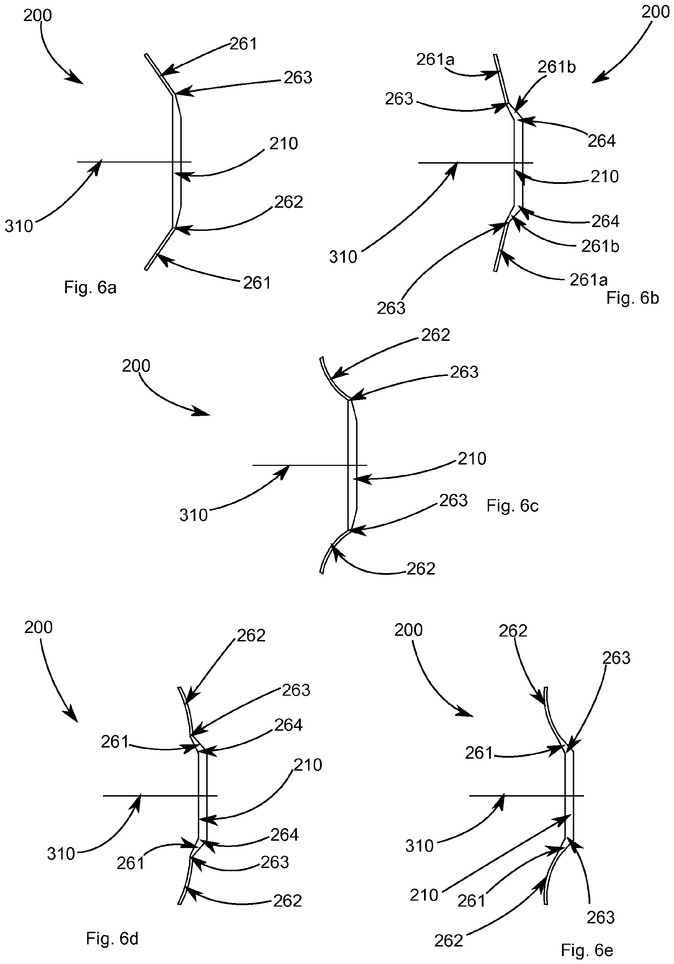

Les figures 6a à 6e illustrent, selon une vue en coupe et de profile, une pluralité de modes de réalisation du dispositif 200 selon la présente invention dans lesquels les axes de rayonnage sont inclinés 261 et/ou courbés 262 relativement au plan principal dans lequel s'étend la zone centrale 210. Ces inclinaisons et/ou courbures peuvent également être décrites relativement à l'axe de rotation 310 de la roue 100.

Il est à noter qu'une manière d'incliner et/ou de courber un ou plusieurs axes de rayonnage peut comprendre une étape d'emboutissage du dispositif 200.

Par exemple, sur les figures 6a à 6e, on remarque la zone centrale 210 s'étendant dans le plan principal. Selon ce mode de réalisation, au moins un axe de rayonnage et de préférence chaque axe de rayonnage comprend au moins une zone de déformation 263. Cette zone de déformation 263 correspond à la zone de l'axe de rayonnage à partir de laquelle l'axe de rayonnage ne s'étend plus dans le plan principal, mais dans un plan secondaire.

Selon les modes de réalisation des figures 6b et 6d un axe de rayonnage peut comprendre deux zones de déformations successives 263 et 264 de sorte à présenter en outre une portion s'étendant dans un plan d'extension tertiaire.

Selon les modes de réalisation des figures 6c à 6e, les axes de rayonnage sont courbés et peuvent présenter en plus une portion inclinée 261.

Ainsi, la figure 6a représente un voile 200 embouti dont la zone périphérique 220 comprend au moins une portion inclinée 261 relativement au plan principal et à l'axe de rotation 310 de la roue 100. La jonction entre cette portion inclinée 261 et le reste du voile 200 se fait au niveau d'une zone de déformation 263.

La figure 6b illustre un mode de réalisation dans lequel la zone périphérique 220 comprend une première portion inclinée 261a et une deuxième portion inclinée 261b. La première portion inclinée 261a est mécaniquement reliée à la deuxième portion inclinée 261b au moyen d'une zone de déformation 263, la deuxième portion inclinée 261b étant mécaniquement reliée à la zone centrale 210 par une zone de déformation additionnelle 264.

La figure 6c représente un mode de réalisation sensiblement similaire à celui de la figure 6a à ceci près que la zone périphérique 220 comprend une portion courbée 262 à la place de la portion inclinée 261 de la figure 6a.

La figure 6d illustre un mode de réalisation dans lequel la zone périphérique 220 comprend une portion inclinée 261 et une portion courbée 262.

La portion courbée 262 est mécaniquement reliée à la portion inclinée 261 par une zone de déformation 263, et la portion inclinée 261 est reliée à la zone centrale 210 par une zone de déformation additionnelle 264.

La figure 6e représente un mode de réalisation dans lequel la zone périphérique 220 comprend une portion inclinée 261 prolongée d'une portion courbée 262, la portion courbée 262 étant mécanique reliée à la zone centrale 210 par la portion inclinée 261, elle-même étant reliée mécaniquement à la zone centrale 210 par une zone de déformation 263.

Ainsi, le fait de disposer d'axes de rayonnage emboutis, c'est-à-dire conformés pour présenter une portion s'étendant principalement dans un plan différent du plan principal, assure le déport de la jante 400 par rapport au support du moyeu 300 de la roue 100, la souplesse de la roue 100 est ainsi supérieure à celle d'une roue ayant la même construction de voile 200, mais avec une forme plane ou avec un déport assuré uniquement dans la zone centrale 210.

De plus, dans le cas où l'on souhaite conserver un maximum de rigidité au voile 200, on positionnera la zone de déformation 263 dans la zone située entre l'axe de rotation 310 de la roue 100 et le dernier croisement de faisceaux unidirectionnels de fibres. De manière particulièrement avantageuse, la forme du voile 200 et l'orientation des axes de rayonnage permettent de déterminer l'angle dans lequel sera transmis l'effort entre la jante 400 et l'axe de rotation 310 de la roue 100, que la roue 100 porte un ou plusieurs voiles 200 en vis-à-vis comme cela sera décrit par la suite.

Selon un autre mode de réalisation, les faisceaux unidirectionnels de fibres peuvent être montés sous contrainte, par exemple avec un allongement sous contrainte.

Ces figures illustrent ainsi la grande gamme de formes possibles pour le dispositif 200 selon la présente invention. Avantageusement, cette étape de conformation, par emboutissage par exemple, d'une partie au moins du voile 200 permet une conformation du voile 200 en fonction de la volonté d'optimiser la rigidité ou de trouver une certaine souplesse si besoin est.

La conformation des axes de rayonnage permet de déterminer l'axe selon lequel les faisceaux unidirectionnels de fibres sont contraints par les mouvements et les contraintes fonctionnelles de la roue 100 au niveau des axes de rayonnage. Cette conformation, de préférence par emboutissage, permet donc de contrôler la souplesse de la roue 100 et de l'ajuster aux contraintes de fonctionnement.

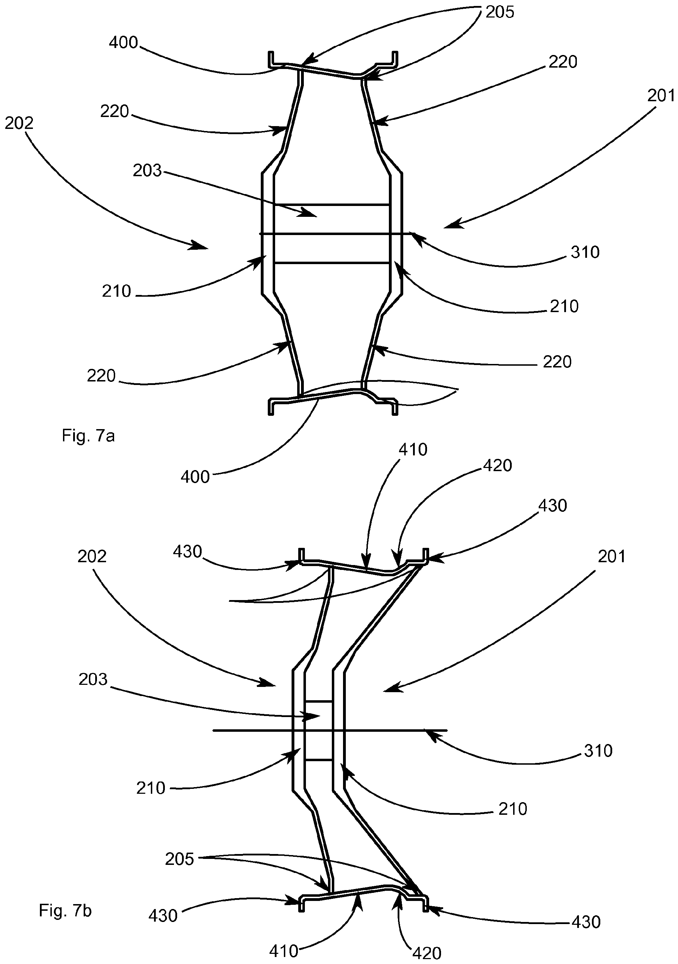

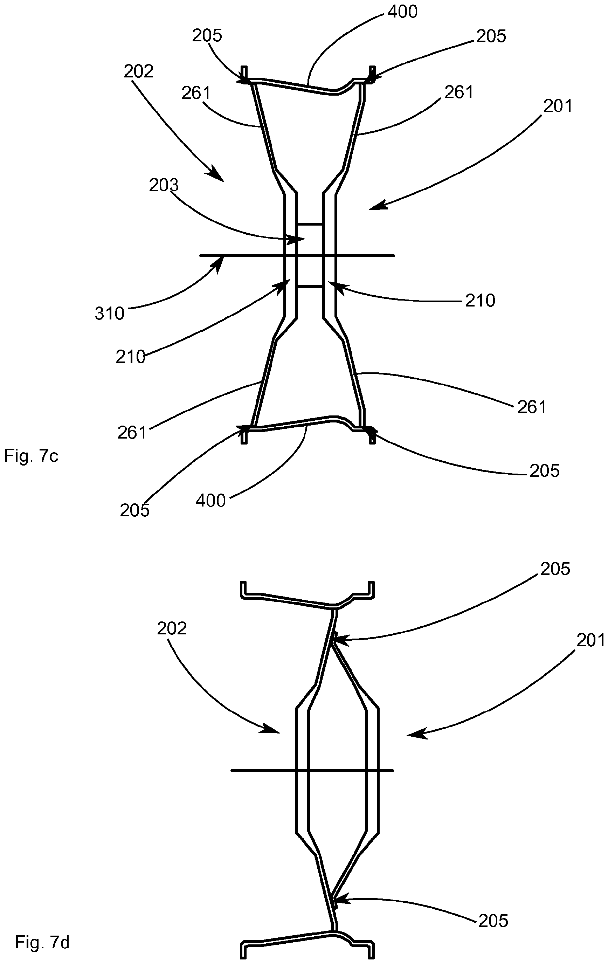

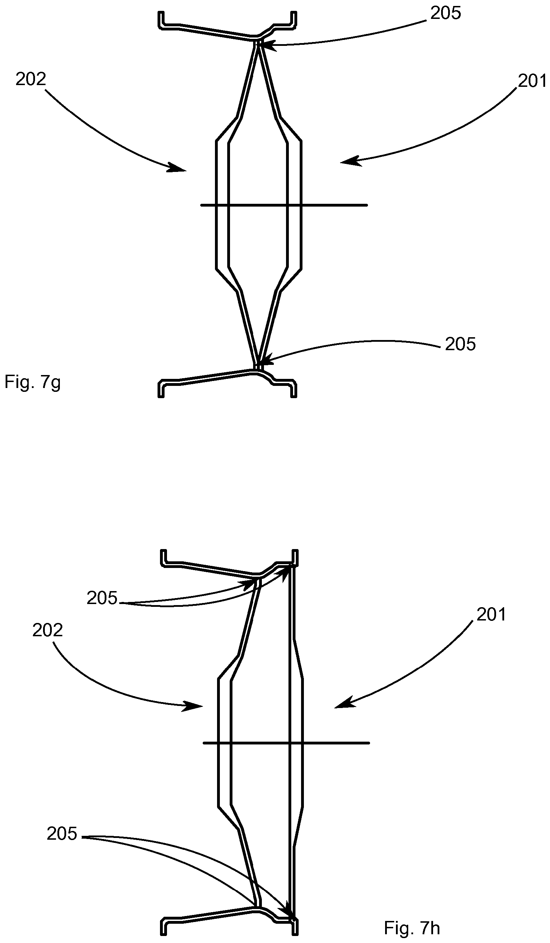

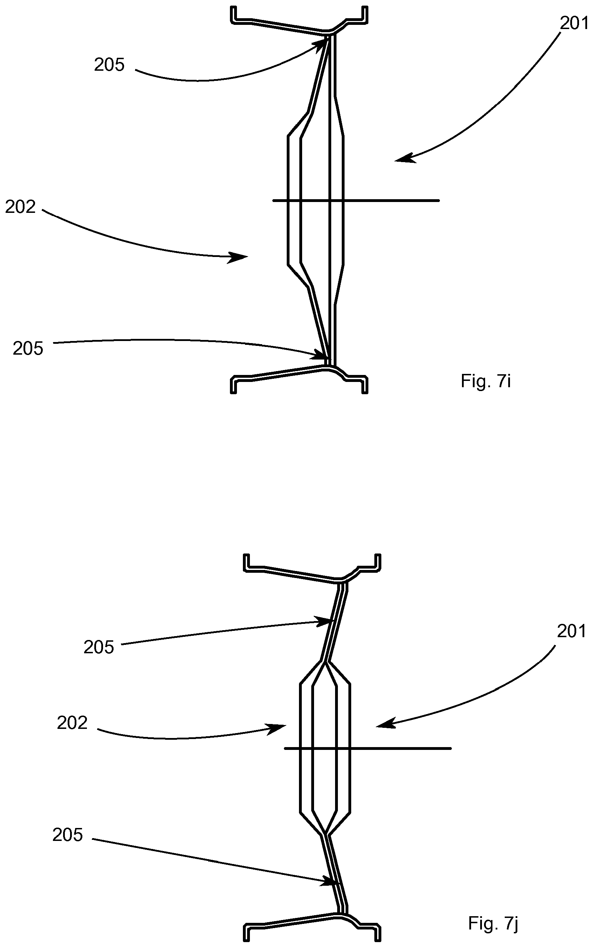

Les figures 7a à 7j, 8a et 8b et 9a à 9g représentent un ensemble comprenant un premier 201 et un deuxième 202 dispositif tel que décrits précédemment selon plusieurs modes de réalisation de la présente invention.

De manière particulièrement avantageuse, l'assemblage d'un premier 201 et d'un deuxième 202 dispositifs selon la présente invention de sorte à former ledit ensemble permet d'orienter les contraintes en traction sur la zone périphérique 220 de chaque voile 201 et 202.

Cet ensemble forme alors un voile dit final.

Ainsi, selon ces modes de réalisation, un premier voile 201 et un deuxième voile 202 sont disposés et solidarisés en vis-à-vis l'un relativement à l'autre.

De manière avantageuse, ces deux voiles 200 sont disposés et solidarisés de telle sorte que la triangulation des axes de rayonnage du premier voile 201 et des axes de rayonnage du deuxième voile 202 avec les points de solidarisation 205 au niveau de la jante 400 assure la rigidité de l'ensemble de la roue 100 par la création de triangles dans le plan transverse de la roue 100. Il en va de même quand les axes de rayonnage de chaque voile 201 et 202 présentent un décalage angulaire entre eux dans le plan transverse de la roue 100, ce qui induit un effet de triangulation.

Ainsi, de manière particulièrement avantageuse, la présente invention concerne un ensemble d'un premier voile 201 et d'un deuxième voile 202 de sorte à former le voile final d'une roue 100. Cela permet d'en optimiser les caractéristiques mécaniques.

Selon ce mode de réalisation, les premier 201 et deuxième 202 voiles sont solidarisés entre eux au niveau d'au moins une zone de solidarisation 205 et sont chacun solidarisé à leur périphérie sur une jante 400 et/ou sur l'autre voile 201, 202.

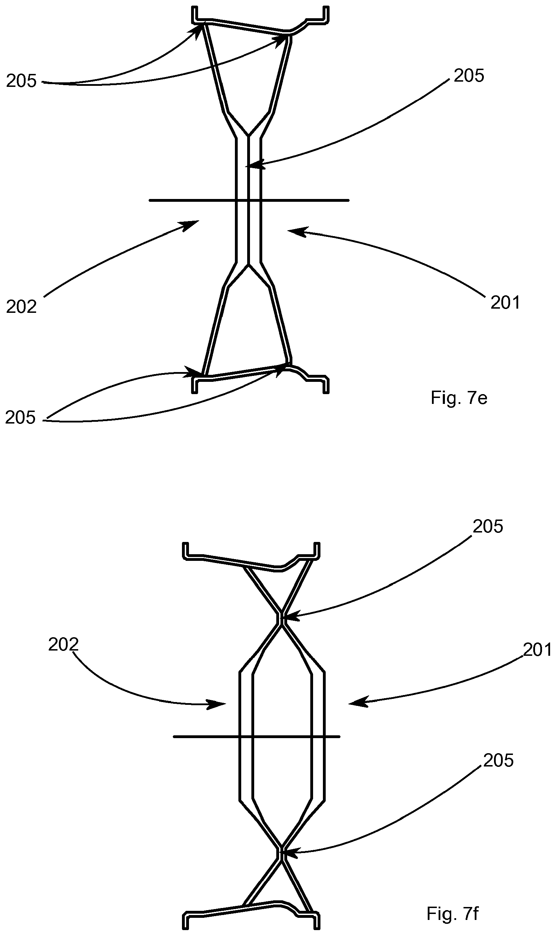

Avantageusement, relativement à l'axe de rotation 310 de la roue 100, le premier 201 et le deuxième 202 voiles peuvent être directement reliés entre eux comme illustré en figure 7e, et/ou être reliés à une entretoise 203 comme illustré en figure 7a, 7b et 7c.

Selon un mode de réalisation, le premier 201 et le deuxième 202 voiles peuvent être maintenus positionnées entre eux dans une position contrôlée par une structure extérieure à la roue 100 et liée mécaniquement à l'axe de rotation 310 de la roue 100, comme par exemple par une entretoise 203.

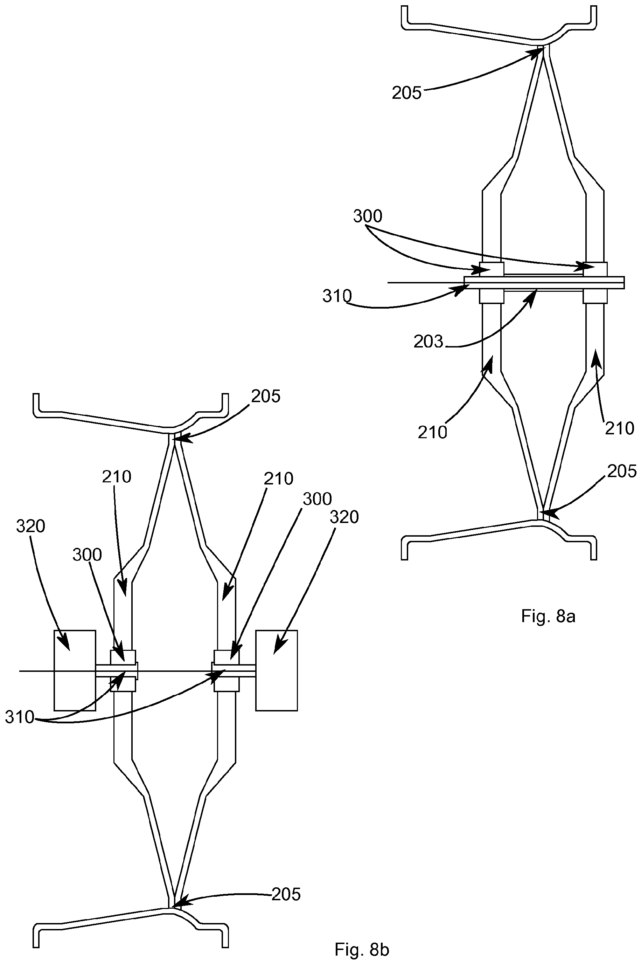

De préférence cette entretoise 203 peut être montée sur l'axe de rotation 310 de roue 100, et peut maintenir l'espacement entre les voiles 201 et 202 comme illustré en figure 8a.

Selon un autre mode de réalisation, le premier 201 et le deuxième 202 voile peuvent être maintenus entre eux dans une position contrôlée par une structure extérieure à la roue 100 et liée mécaniquement à l'axe de rotation 310 de la roue 100, comme par exemple par des supports de moyeu 300 séparés et coaxiaux reliant chaque voile 201 et 202 à une partie de la structure portant la roue 100 comme illustré en figure 8b.

De préférence, l'entretoise 203 peut être intégrée à un des voiles 201 et 202 ou en partie aux deux voiles si elle est incluse dans leur fabrication ou rajoutée lors de l'assemblage de la roue 100 par tout moyen, qu'il soit mécanique, par collage ou par soudage.

Avantageusement, pour obtenir l'effet de triangulation dans le plan transverse de la roue 100, les premier 201 et deuxième 202 voiles peuvent être écartés en leur centre, maintenus par une entretoise 203 adéquate comme en figure 8a ou portés par des support de moyeu 300 séparés comme en figure 8b et converger l'un vers l'autre au niveau de la jante 400.

Pour obtenir cet effet de triangulation, les premier 201 et deuxième 202 voiles peuvent aussi être reliés au niveau de leur zone centrale 210 et diverger au niveau de la jante 400 pour obtenir un autre type de triangulation, une triangulation dite inversée comme illustrée en figure 7e.

Selon un autre mode de réalisation, il est aussi possible d'obtenir l'effet de triangulation si les premier 201 et deuxième 202 voiles, de préférence emboutis, sont écartés au niveau de leur zone centrale 210, écartés au niveau de la jante 400 et sont solidarisés au niveau d'une partie de la zone périphérique 220 créant deux triangulations opposées par leur pointe comme cela est illustré en figure 7f.

Selon un mode de réalisation, chaque voile 201 et 202 peut être plan et solidaire l'un de l'autre au niveau de la jante 400 et/ou de leur zone centrale 210 au moyen d'une entretoise 203 par exemple.

Selon un autre mode de réalisation, le premier 201 et le deuxième 202 voiles sont tous deux emboutis de manière complémentaire de sorte à ce que leurs zones centrales 210 soient parallèles l'une relativement à l'autre et que leurs axes de rayonnage soient parallèles les uns relativement aux autres tout en étant incliné relativement aux zones centrales 210. Ce mode de réalisation est illustré en figure 7j par exemple.

Plus généralement la présente invention concerne un ensemble d'au moins un premier 201 et un deuxième 202 voile pouvant comprendre toute combinaison d'emboutissages du ou des voiles 201 et 202 comme décrit précédemment et étant solidarisés à une jante 400.

Selon les modes de réalisation des figures 8a et 8b, pour les jantes 400 dans lesquelles le support du moyeu 300 est porté par la roue 100, dans les roues de motocyclettes ou de vélos par exemple, il est possible d'associer au moins deux voiles 201 et 202 en vis-à-vis portant chacun un roulement ou tout dispositif permettant la rotation de la roue 100 autour de son axe de rotation 310 et, soit installer une entretoise 203 sur l'axe de rotation 310 de la roue 100 comme en figure 8a, entre les voiles 201 et 202 de telle sorte que la rigidité de la roue 100 au niveau de l'axe de rotation 310 soit assurée par la structure des voiles 201 et 202, ou à maintenir chaque partie du support du moyeu 300, portée par un voile 201 et 202, en place séparément comme illustré en figure 8b.

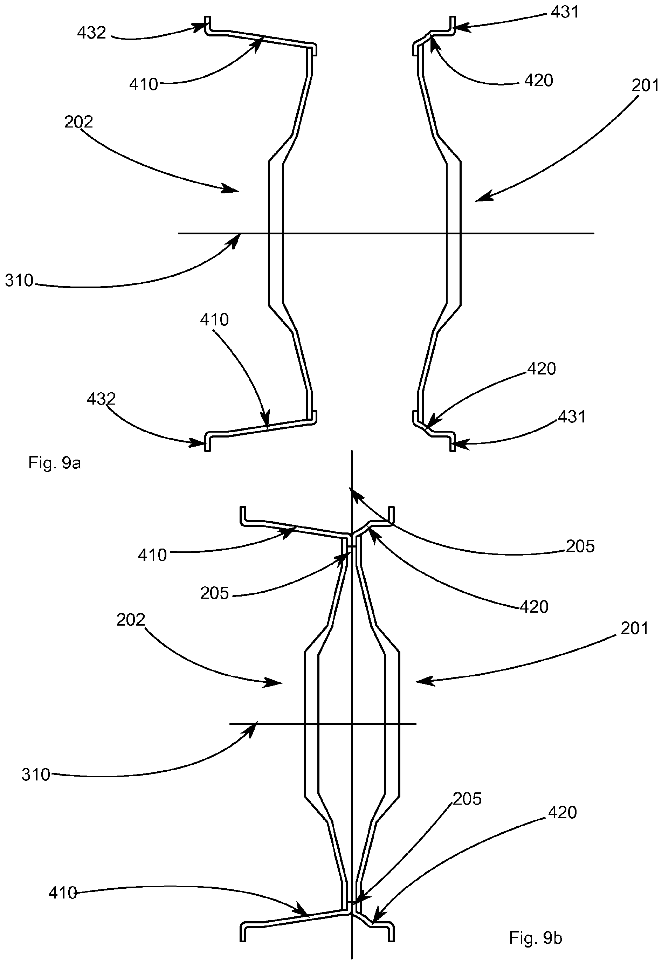

Selon les modes de réalisation illustrés au travers des figures 9a et 9b, le premier 201 et le deuxième 202 voiles peuvent porter chacun d'eux une partie, de préférence complémentaire, d'une jante 400. Par exemple, une jante 400 peut être constituée de deux parties 401 et 402, chacune étant portée par un voile 201 et 202 différent de sorte que la solidarisation du premier voile 201 et avec le deuxième voile 202 assure la formation de la jante 400, de préférence dans son ensemble.

Ainsi sur la figure 9a, le premier voile 201 comprend, au niveau de sa zone périphérique 220, une portion solidaire d'une première partie 401 de la jante 400, et portant le talon 420 de la jante 400 et un premier rebord 431 de la jante 400.

Le deuxième voile 202 comprend lui, au niveau de sa zone périphérique 220, une portion solidaire d'une deuxième partie 402 de la jante 400, et portant le fond de jante 410 de la jante 400 et un deuxième rebord 430 de la jante 400.

Selon ce mode de réalisation, la jante 400 peut comprendre des parties en matériaux composites.

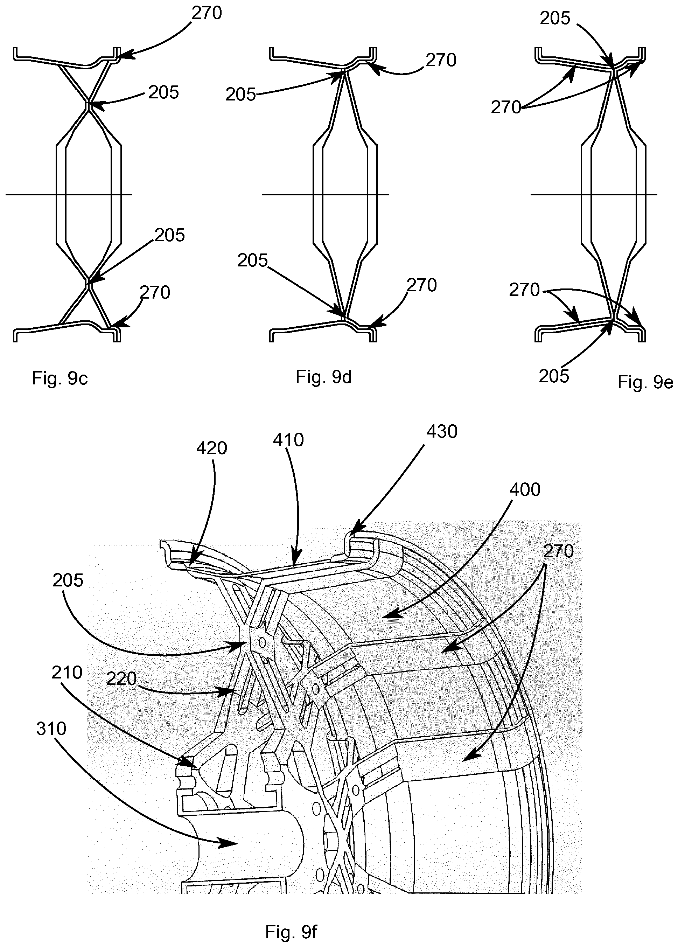

Les figures 9c à 9g représentent des modes de réalisation dans lesquels les axes de rayonnage d'un ou des deux voiles se prolongent 270 pour contourner en partie au moins une partie de la jante 400.

Selon ces modes de réalisation, les axes de rayonnage, c'est-à-dire les zones unidirectionnelles du voile rejoignant la jante 400 peuvent être prolongées en passant sous la base de la jante 400 jusqu'au talon 420 comme illustré en figure 9c et éventuellement au rebord 430 comme illustré en figure 9d.

Selon ce mode de réalisation, la zone périphérique 220 comprend des prolongements 270 des axes de rayonnage.

Selon le mode de réalisation de la figure 9e, chacun des voiles peut être étendu pour être en partie conformé selon la jante 400 et ainsi passer sous une partie complémentaire de la jante 400 au moyen de prolongements 270.

De manière avantageuse, au moins un axe de rayonnage peut être prolongé de sorte à constituer en partie au moins une portion de la jante 400.

Ainsi la figure 9f est une vue en coupe et en perspective d'une roue comprenant un premier voile 201 et un deuxième voile 202 formant un voile final.

Le premier voile 201 et le deuxième voile 202 étant solidarisés au niveau d'une zone de solidarisation 205 située dans la zone périphérique 220. On note sur cette figure que les axes de rayonnage de chaque voile comprennent des prolongements 270 s'étendant depuis la zone périphérique sous la jante et jusqu'aux rebords 430 de celle-ci.

Avantageusement, le talon 420 de la jante 400 peut être réalisé en partie ou totalement par enroulement de nappes comprenant des faisceaux unidirectionnels de fibres autour de l'axe de rotation 310 de la roue 100. Ce type de construction présente l'avantage de pouvoir être réalisé, comme pour la fabrication des voiles, par un automate qui peut être soit indépendant de la fabrication du voile soit intégré à la fabrication de celui-ci et synchronisé avec les autres éléments de la machine décrite ci-après et destinée à la fabrication mécanisée de la présente invention.

Avantageusement, le rebord 430 de la jante 400 peut être réalisé en partie ou totalement par enroulement de nappes comprenant des faisceaux unidirectionnels de fibres autour de l'axe de rotation 310 de la roue 100. Sa fabrication répondant à la même logique que celle de la fabrication du talon 420, les mêmes caractéristiques et spécificités que celles relatives à la fabrication du talon 420 s'appliquent à cette partie de la jante 400.

Selon un mode de réalisation, le fond de jante 410 peut être assemblé mécaniquement, collé, soudé ou intégré dans une fabrication composite dans laquelle les deux voiles portant leur talon 420 et leur rebord 430 seraient intégrés. Là aussi, les axes de rayonnage peuvent se prolonger du voile au talon 420 en longeant le fond de jante 410 pour aller jusqu'au talon 420, voire jusqu'au rebord 430.

Avantageusement, le fond de la jante 410 peut être réalisé en partie ou totalement par enroulement de nappes comprenant des faisceaux unidirectionnels de fibres autour de l'axe de rotation 310 de la roue 100. Sa fabrication répondant à la même logique que celle de la fabrication du talon 420 ou du rebord 430, les mêmes caractéristiques et spécificités que celles relatives à la fabrication du talon 420 ou du rebord 430 s'appliquent à cette partie de la jante 400.

Selon un mode de réalisation, la jante 400 est ainsi réalisée en partie ou totalement en matériaux composites à partir d'une ou de plusieurs nappes comprenant au moins un faisceau unidirectionnel de fibres. Une jante 400 ainsi formée permet de reprendre toutes les contraintes subies par les axes de rayonnage de chaque dispositif.

De préférence, la jante 400, qu'elle soit en matériaux composites ou pas, peut être soutenue par le prolongement 270 d'une partie au moins des axes de rayonnage d'un ou des deux voiles 201 et 202.

De manière avantageuse, la roue 100 ainsi formée peut comprendre un voile 200 formé d'un premier 201 et d'un deuxième 202 dispositifs et d'une jante 400 formée en partie au moins par des matériaux composites et/ou supportées en partie ou intégralement par un ou plusieurs prolongements 270 d'axes de rayonnage.

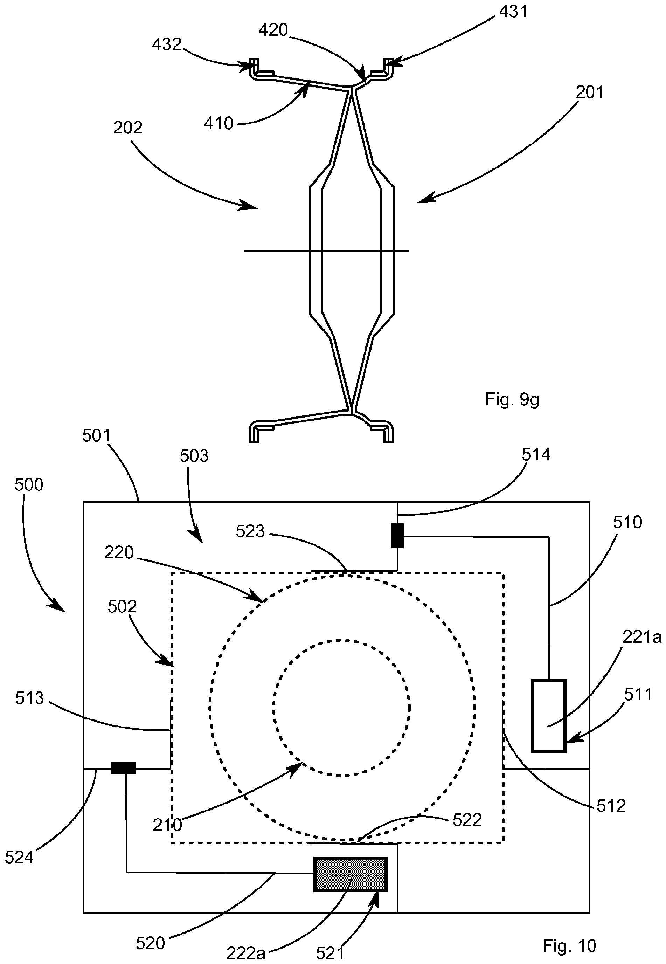

Les axes de rayonnage de la roue 100 peuvent de plus être prolongés de sorte à porter le talon 420 et/ou le rebord 430 de la jante 400 et/ou le fond de la jante 410 comme illustré en figure 9g.

Les propriétés de la roue 100 peuvent ainsi être gérées en fonction du type de construction et de la forme des voiles, chacun ayant une action qui se trouve être fonction de ses caractéristiques propres et l'ensemble réagissant en fonction des caractéristiques de l'association desdits voiles.

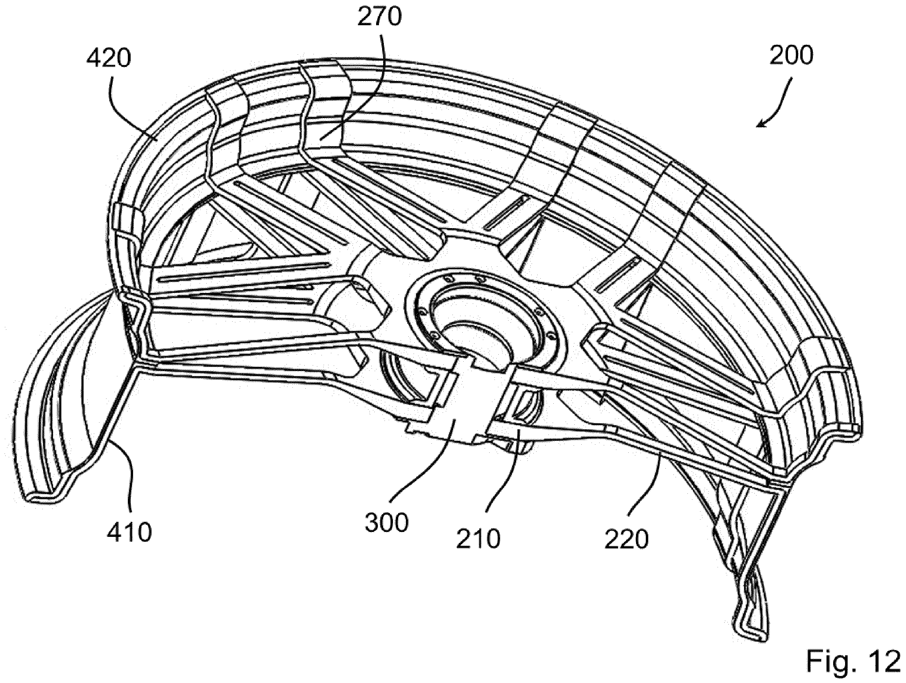

La figure 12 montre une autre version de réalisation du dispositif, et révèle plus particulièrement l'intime imbrication structurelle entre la zone centrale 210 et la zone périphérique 220. La zone périphérique 220 dispose ici de rayons organisés par paires, chaque paire ayant une orientation avec une direction radiale prépondérante, de sorte à rejoindre le moyeu et la jante. Les rayons correspondent ici à trois axes d'extension, correspondant à trois directions d'enroulement de nappes.

Dans la zone 220, dans chaque axe d'extension, la nappe forme avantageusement un empilement de couches ayant chacune une orientation de résistance mécanique privilégiée, correspondant à la direction des fibres orientées suivant cet axe d'extension.

Dans la zone 210, les nappes des différents axes d'extension se superposent au fur et à mesure de leur enroulement, formant un ensemble de couches alternées, cette alternance étant de préférence régulière et permettant, de manière successive d'empiler, des couches ayant des orientations différentes de faisceau.

La conséquence est que la zone périphérique 220 est formée de portions ayant des propriétés mécaniques fortement anisotropes, suivant leur axe d'extension, correspondant à celui des fibres. Au contraire, dans la zone centrale 210, les propriétés mécaniques sont plus isotropes, de par l'empilement des faisceaux unidirectionnels présentant des orientations différentes.

On notera que la section de la figure 12 révèle les différences d'épaisseur entre la zone 210 (plus épaisse car formée par l'empilement de plus de couches) et la zone 220. Par exemple, si on utilise trois nappes, la zone 220 sera trois fois plus fine que la zone 210. Par ailleurs, dans cet exemple, le chevauchement progressif des nappes forme une partie de la zone centrale 210 avec une épaisseur croissante jusqu'à une épaisseur maximale correspondant à l'empilement de toutes les couches.

La figure 12 montre par ailleurs le raccordement de l'extrémité distale de la zone périphérique sur une portion de jante. Un prolongement 270 des portions servant à former la zone périphérique 220 est collée éventuellement jusqu'au niveau du talon 420 de la jante. On réalise ainsi une répartition efficace de la charge issue des rayons.

### ➢ Procédé de fabrication du voile :

La présente invention concerne également un procédé de fabrication d'un dispositif 200 tel que présenté précédemment.

De manière particulièrement avantageuse, les matériaux composites permettent, en raison de leur anisotropie, de fabriquer des dispositifs 200 monoblocs dont les zones ont des propriétés différentes en fonction de la répartition et de la nature des faisceaux unidirectionnels de fibres dans chacune d'elles.

Selon un mode de réalisation, le procédé selon la présente invention comprend au moins les étapes suivantes :
∘ Positionnement de la première nappe 221a selon le premier axe d'extension 231 de sorte à définir au moins un premier axe de rayonnage 230 de la roue 100 ;
∘ Positionnement de la deuxième nappe 222a selon le deuxième axe d'extension 241 de sorte à définir au moins un deuxième axe de rayonnage 240 de la roue 100 différent du premier axe de rayonnage 230 de la roue 100 ;
∘ Positionnement de la troisième nappe 223a selon le troisième axe d'extension 251 de sorte à définir au moins un troisième axe de rayonnage 250 de la roue 100 différent du premier axe de rayonnage 230 de la roue 100 et du deuxième axe de rayonnage 240 de la roue 100.

De manière avantageuse, et afin de former dans la zone centrale 210 l'empilement multidirectionnel 211, la première 221a, la deuxième 222a et la troisième 223a nappe sont disposées les unes relativement aux autres de sorte à être superposées au moins en partie au niveau de la zone centrale 210.

De préférence, ce procédé peut comprendre en outre au moins les étapes suivantes :
∘ Repliement de la première nappe 221a sur elle-même en la superposant à la deuxième nappe 222a au niveau de la zone centrale 210 et à elle-même au niveau de la zone périphérique 220 ;
   Ce repliement de la première nappe 221a n'est pas nécessairement un repliement consistant à mettre en contact la première nappe 221a avec une partie d'elle-même. En particulier, et de manière préférée, la première nappe 221a n'est pas repliée sur elle-même de sorte à être en contact physique avec elle-même de manière directe. Elle est repliée sur elle-même de sorte à entourer une portion de la deuxième nappe 222a, de préférence ladite portion de la deuxième nappe 222a étant superposée à une portion de la première nappe 221a.
   Ainsi ce repliement consiste à former un empilement multidirectionnel 211 comprenant une partie de la première nappe 221a, une partie de la deuxième nappe 222a puis une autre partie de la première nappe 221a, et de préférence selon cet ordre.
∘ Repliement de la deuxième nappe 222a sur elle-même en la superposant à la première nappe 221a au niveau de la zone centrale 210 et à elle-même au niveau de la zone périphérique 220. Comme pour la première nappe 221a, ce repliement vise les mêmes objectifs à savoir continuer l'empilement multidirectionnel 211 au niveau de la zone centrale 210 en ajoutant une autre portion de la deuxième nappe 222a à l'empilement multidirectionnel 211 précédemment décrit.
∘ Repliement de la troisième nappe 223a sur elle-même en la superposant à la première nappe 221a et/ou à la deuxième nappe 222a au niveau de la zone centrale 210 et à elle-même au niveau de la zone périphérique 220. Comme pour la première 221a et la deuxième nappe 222a, ce repliement vise les mêmes objectifs à savoir continuer l'empilement multidirectionnel 211 au niveau de la zone centrale 210 en ajoutant une autre portion de la troisième nappe 223a à l'empilement multidirectionnel 211 précédemment décrit.

En répétant ces étapes, on densifie la zone centrale 210 en accroissant l'épaisseur de l'empilement multidirectionnel 211, cette épaisseur étant prise selon l'axe de rotation 310 de la roue 100.

Il est à noter que, selon un mode de réalisation, le nombre de rayons reste constant autour de l'axe de rotation 310 de la roue 100 ; néanmoins, chaque axe de rayonnage comprend une pluralité de niveaux correspondant à chaque repliement. Ainsi, l'épaisseur de chaque axe de rayonnage, selon l'axe de rotation 310 de la roue 100, augmente à chaque repliement.

Selon un mode de réalisation, la formation du voile 200 peut comprendre une étape de découpe d'une partie au moins d'un ou de plusieurs axes de rayonnage de sorte à alléger la zone périphérique 220 par exemple, comme cela a été présenté précédemment au travers de la figure 5.

Ainsi, le procédé selon la présente invention peut comprendre en outre au moins une étape de découpe d'une portion au moins de la première 221a, de la deuxième 222a et/ou de la troisième 223a nappe au niveau de la zone périphérique 220 de sorte à former respectivement une première 232, une deuxième 242 et/ou une troisième 252 pluralités d'axes de rayonnage de la roue 100 à partir respectivement de la première 221a, de la deuxième 222a et/ou de la troisième 223a nappes.

De même, comme précédemment présenté, le voile 200 peut être embouti de sorte à ne pas être plan, et à ne pas s'étendre dans son ensemble dans le plan principal. Ainsi, le présent procédé peut comprendre en outre une étape d'emboutissage configurée pour déformer au moins une portion de la première 221a et/ou de la deuxième 222a et/ou de la troisième 223a nappes. La souplesse de la roue 100, et sa réponse mécanique peuvent ainsi être contrôlées lors de la fabrication du voile 200.

Le présent procédé peut également comprendre en outre une étape de formation d'une partie au moins de la jante 400 de la roue 100 par enroulement d'au moins une nappe additionnelle autour de la zone périphérique 220 relativement à l'axe de rotation 310 de la roue comme cela a été précédemment décrit.

### > Machine de mise en œuvre du procédé de fabrication :

Enfin la présente invention concerne également une machine 500 de mise en œuvre du procédé précédemment décrit.

La présente machine 500, qui sera décrite plus en détail par la suite, permet de fabriquer à une échelle industrielle le dispositif 200 précédemment décrit, c'est-à-dire à une vitesse de production élevée.

Selon un mode de réalisation, la présente machine 500 est configurée pour disposer à haute fréquence les nappes 221a, 222a, 223a. De préférence, cette machine 500 utilise des nappes 221a, 222a, 223a enroulées formant des bobines 511, 521, 531.

Chaque nappe 221a, 222a, 223a est alors déroulée depuis une bobine 511, 521, 531 portée par un bras mobile 510, 520, 530 qui décrit un tour autour de pièces délimitant l'extrémité des faisceaux unidirectionnels de fibres à former. Ces pièces sont appelées ici bras fixe 512, 522, 532 et bras de butée 513, 523, 533.

Les bras mobiles 510, 520, 530 sont avantageusement synchronisés en rotation pour ne pas se toucher pendant le fonctionnement de la machine 500. Avantageusement, cette synchronicité permet que les diverses pièces mobiles de la machine 500 n'entrent pas en collision entre elles.

Cette machine 500 permet ainsi d'atteindre des vitesses très élevées grâce à un mouvement continu qui peut être accéléré autant que la résistance des nappes 221a, 222a, 223a le permet.

De préférence, les nappes 221a, 222a, 223a enroulées sont maintenues au moins à leurs deux extrémités au niveau respectivement des bras de butée 513, 523, 533 et des bras fixes 512, 522, 532 tandis que le bras mobile 510, 520, 530 portant la matière à dérouler tourne autour d'un axe parallèle à celui des deux extrémités de la nappe 221a, 222a, 223a.

On appellera par la suite un ensemble de déroulement un ensemble comprenant un bras mobile 510, 520, 530 portant une bobine 511, 521, 531 de nappe, un bras fixe 512, 522, 532, et un bras de butée 531, 532, 533.

Avantageusement, la machine 500 comprend autant d'ensembles de déroulement qu'il y a de nappes.

La figure 10 représente une machine 500, vue du dessus, selon un mode de réalisation de la présente invention, configurée pour former un voile 200 comprenant quatre axes de rayonnage formés à partir de deux nappes 221a et 222a.

Cette machine 500, selon un mode de réalisation, comprend un cadre 501, un premier bras mobile 510 en rotation autour d'un axe parallèle au deuxième axe d'extension 241, un deuxième bras mobile 520 en rotation autour d'un axe parallèle au premier axe d'extension 231, un premier bras fixe 512, un premier bras de butée 513, un deuxième bras fixe 522 et un deuxième bras de butée 523.

On notera que le premier bras mobile 510 en rotation porte une première bobine 511 comprenant la première nappe 221a enroulée. Le deuxième bras mobile 520 en rotation porte une deuxième bobine 521 comprenant la deuxième nappe 222a enroulée.

De préférence, le premier bras fixe 512 est parallèle à la première bobine 511 et à l'axe de rotation du premier bras mobile 510.

De préférence, le deuxième bras fixe 522 est parallèle à la deuxième bobine 521 et à l'axe de rotation du deuxième bras mobile 520.

Selon un mode de réalisation, chaque bras mobile est solidarisé au cadre 501 par une pièce traversant l'axe de rotation dudit bras et/ou le plan déplacement des supports de bobine.

On notera également que le premier bras mobile 510 en rotation est supporté par une première pièce de support 514 solidaire du cadre 501. Le deuxième bras mobile 520 en rotation est supporté par une deuxième pièce de support 524 solidaire du cadre 501.

Selon un mode de réalisation, la première pièce de support 514 s'étend selon un axe d'extension traversant le circuit sur lequel se déplace le premier bras mobile 510. De préférence, la première pièce de support 514 s'étend selon un axe d'extension orthogonal au premier axe d'extension 241. Avantageusement, la première pièce de support 514 s'étend selon un axe d'extension colinéaire à l'axe de rotation du premier bras mobile 510.

Selon un mode de réalisation, la deuxième pièce de support 524 s'étend selon un axe d'extension traversant le circuit sur lequel se déplace le deuxième bras mobile 520. De préférence, la deuxième pièce de support 524 s'étend selon un axe d'extension orthogonal au deuxième axe d'extension 231. Avantageusement, la deuxième pièce de support 524 s'étend selon un axe d'extension colinéaire à l'axe de rotation du deuxième bras mobile 520.

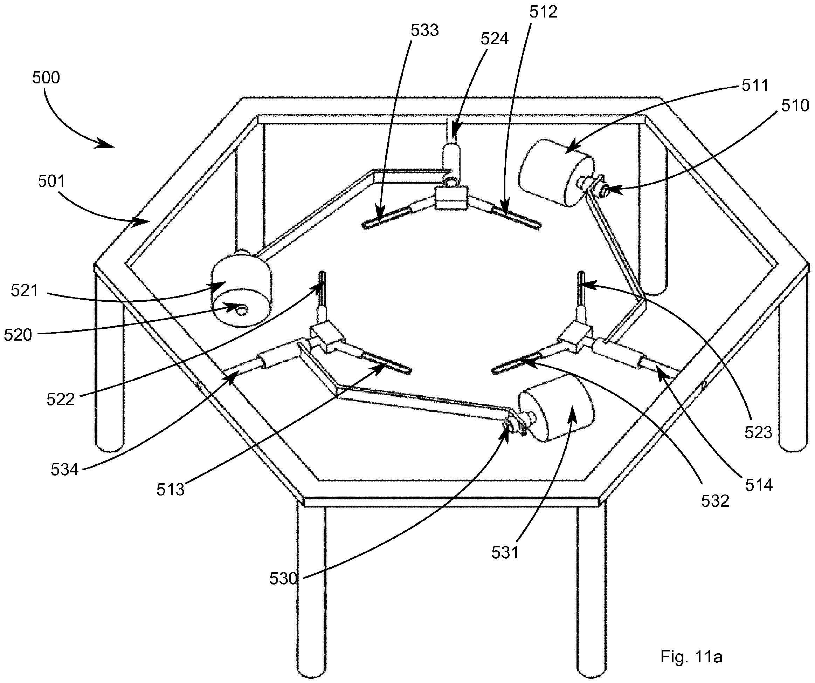

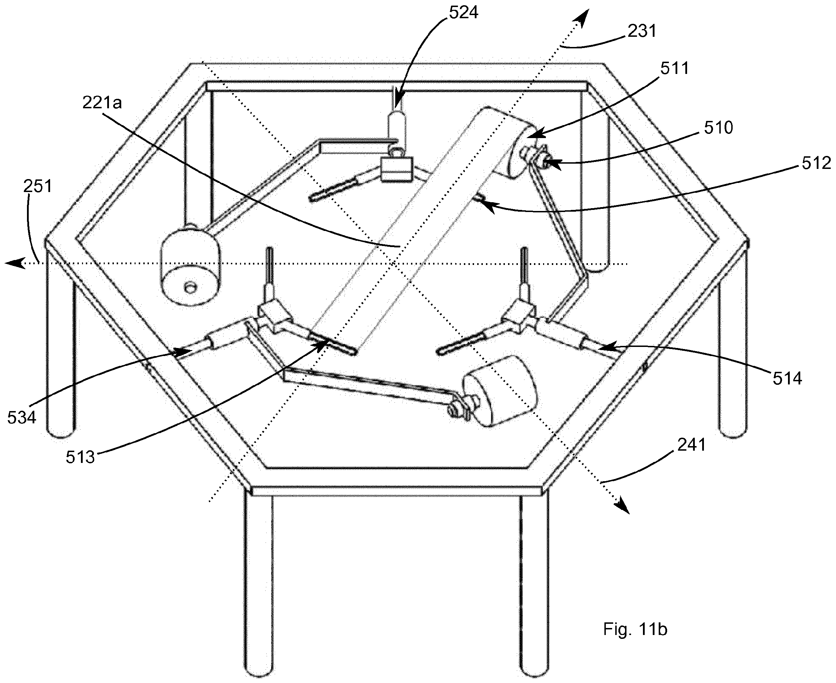

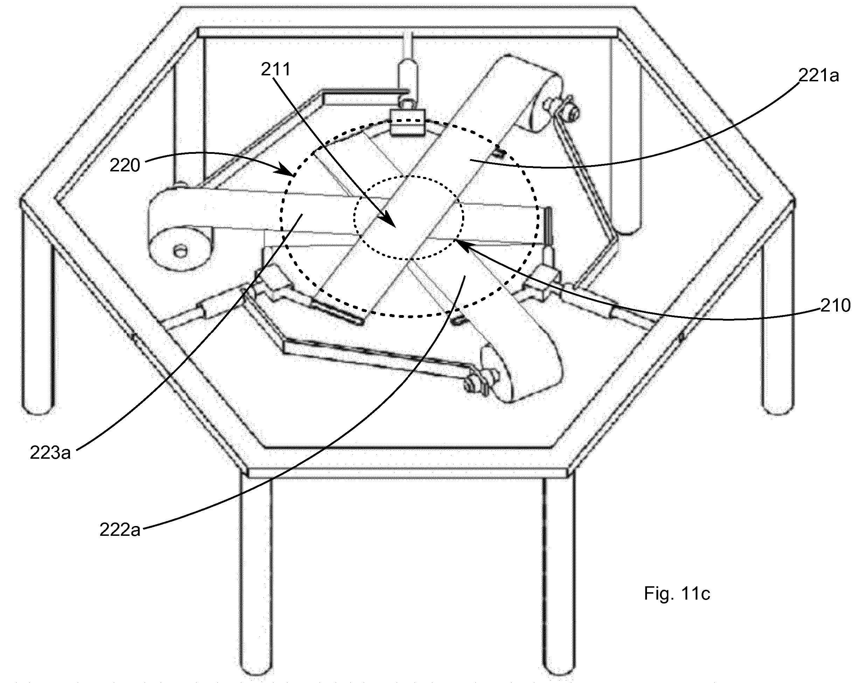

Les figures 11a, 11b et 11c représentent une machine 500 selon un autre mode de réalisation de la présente invention configurée pour former un dispositif à partir de trois nappes.

Selon ce mode de réalisation, la machine 500 comprend au moins :
∘ Un cadre 501 comprenant une partie centrale 502 et une partie périphérique 503 et supportant au moins :
- Un premier bras mobile 510 s'étendant selon une direction orthogonale au premier axe d'extension 231 et portant au moins une première bobine 511 comprenant un enroulement de la première nappe 221a, l'enroulement de la première nappe 221a étant réalisé selon un axe orthogonal au premier axe d'extension 231 ;
- Un deuxième bras mobile 520 s'étendant selon une direction orthogonale au deuxième axe d'extension 241 et portant au moins une deuxième bobine 521 comprenant un enroulement de la deuxième nappe 222a, l'enroulement de la deuxième nappe 222a étant réalisé selon un axe orthogonal au deuxième axe d'extension 241 ;
- Un troisième bras mobile 530 s'étendant selon une direction orthogonale au troisième axe d'extension 251 et portant au moins une troisième bobine 531 comprenant un enroulement de la troisième nappe 223a, l'enroulement de la troisième nappe 223a étant réalisé selon un axe orthogonal au troisième axe d'extension 251 ;

De préférence, le premier 510, le deuxième 520 et le troisième 530 bras mobiles sont respectivement configurés pour dérouler la première 221a, la deuxième 222a et la troisième 223a nappes selon respectivement le premier 231, le deuxième 241 et le troisième 251 axes d'extension dans la partie périphérique 503 et dans la partie centrale 502 du cadre 501 de sorte à superposer une portion au moins de la première 221a et/ou de la deuxième 222a et/ou de la troisième 223a nappe avec une portion de la première 221a et/ou de la deuxième 222a et/ou de la troisième 223a nappe au niveau de la partie centrale 502 du cadre 501.

Ainsi, de préférence, le cadre 501 supporte en outre au moins :
∘ Une première pièce de support 514 du premier bras mobile 510 s'étendant de préférence selon un axe d'extension orthogonal au premier axe d'extension 231
∘ Un premier bras fixe 512 s'étendant selon une direction parallèle au premier bras mobile 510 ;
∘ Un premier bras de butée 513 s'étendant selon une direction parallèle au premier bras mobile 510, le premier bras fixe 512 et le premier bras de butée 513 étant disposés de part et d'autre de la partie centrale 502 ;
∘ Une deuxième pièce de support 524 du deuxième bras mobile 520 s'étendant de préférence selon un axe d'extension orthogonal au deuxième axe d'extension 241 ;
∘ Un deuxième bras fixe 522 s'étendant selon une direction parallèle au deuxième bras mobile 520 ;
∘ Un deuxième de butée 523 s'étendant selon une direction parallèle au deuxième bras mobile 520, le deuxième bras fixe 522 et le deuxième bras de butée 523 étant disposés de part et d'autre de la partie centrale 502 ;
∘ Une troisième pièce de support 534 du troisième bras mobile 530 s'étendant de préférence selon un axe d'extension orthogonal au troisième axe d'extension 251 ;
∘ Un troisième bras fixe 532 s'étendant selon une direction parallèle au troisième bras mobile 530 ;
∘ Un troisième bras de butée 533 s'étendant selon une direction parallèle au troisième bras mobile 530, le troisième bras fixe 532 et le troisième bras de butée 533 étant disposés de part et d'autre de la partie centrale 502 ;

De préférence, le premier 510, le deuxième 520 et le troisième 530 bras mobiles sont respectivement configurés pour dérouler la première 221a, la deuxième 222a et la troisième 223a nappe selon respectivement le premier 231, le deuxième 241 et le troisième 251 axe d'extension depuis respectivement le premier 512, le deuxième 522 et le troisième 532 bras fixe jusqu'au respectivement premier 513, deuxième 523 et troisième 533 bras de butée de sorte à superposer une portion au moins de respectivement la première 221a, la deuxième 222a et la troisième 223a nappe avec une portion d'au moins l'une quelconque des première 221a, deuxième 222a et/ou troisième 223a nappes au niveau de la partie centrale 502 du cadre 501.

De préférence, les bras mobiles 510, 520, 530 tournent autour de leurs bras fixes 512, 522, 532 et de butée 513, 523, 533 respectifs de sorte à dérouler leurs bobines 511, 521, 531 respectives en enroulant leurs nappes 221a, 222a, 223a respectives autour de leurs bras fixes 512, 522, 532 et de butée 513, 523, 533 respectifs.

Ainsi, cette machine 500 permet, à un rythme industriel, la mise en œuvre du procédé précédemment décrit.

Selon un mode de réalisation non illustré, la machine peut comprendre au moins un quatrième bras mobile en rotation autour de l'axe de rotation de la roue de sorte à former en partie au moins la jante en tournant autour du voile ainsi formé.

### > Exemples de modes de réalisation et de matériaux :

À titre d'exemples non limitatifs, les matériaux suivants pourront être adaptés aux différents éléments de la présente invention :
- La première nappe 221a peut comprendre au moins un des matériaux composites suivant : fibre de verre ou fibre de carbone
- La deuxième nappe 222a peut comprendre au moins un des matériaux composites suivant : fibre de verre ou fibre de carbone
- La troisième nappe 223a peut comprendre au moins un des matériaux composites suivant : fibre de verre ou fibre de carbone

### REFERENCES

- 100.: Roue
- 200.: Voile
201. Premier voile
202. Deuxième voile
203. Entretoise
204. Plan de jonction
205. Zone de solidarisation
210. Zone centrale
211. Empilement multidirectionnel
220. Zone périphérique
221. Première portion
221a. Première nappe
222. Deuxième portion
222a. Deuxième nappe
223. Troisième portion
223a. Troisième nappe
224a. Quatrième nappe
225a. Cinquième nappe
226a. Sixième nappe
227a. Septième nappe
228a. Huitième nappe
229a. Neuvième nappe
230. Premier axe de rayonnage
231. Premier axe d'extension
232. Première pluralité d'axes de rayonnage
240. Deuxième axe de rayonnage
241. Deuxième axe d'extension
242. Deuxième pluralité d'axes de rayonnage
250. Troisième axe de rayonnage
251. Troisième axe d'extension
252. Troisième pluralité d'axes de rayonnage
260. Portion périphérique
261. Portion inclinée
261a. Première portion inclinée
261b. Deuxième portion inclinée
262. Portion courbée
263. Zone de déformation
264. Zone de déformation additionnelle
270. Prolongement
300. Support du moyeu
310. Axe de rotation de la roue
320. Châssis
400. Jante
401. Première partie de la jante
402. Deuxième partie de la jante
410. Fond de la jante
420. Talon de la jante
430. Rebord de la jante
431. Premier rebord de la jante
432. Deuxième rebord de la jante
500. Machine
501. Cadre
502. Partie centrale
503. Partie périphérique
510. Premier bras mobile
511. Première bobine
512. Premier bras fixe
513. Premier bras de butée
514. Première pièce de support
520. Deuxième bras mobile
521. Deuxième bobine
522. Deuxième bras fixe
523. Deuxième bras de butée
524. Deuxième pièce de support
530. Troisième bras mobile
531. Troisième bobine
532. Troisième bras fixe
533. Troisième bras de butée
524. Troisième pièce de support

## Revendications

1. Dispositif (200) configuré pour former au moins en partie au moins un voile d'une roue (100) comprenant une jante (400) et au moins un support d'au moins un moyeu (300) définissant un axe de rotation (310), le dispositif (200) comprenant au moins :
∘ une zone centrale (210) ;
∘ une zone périphérique (220) entourant en partie la zone centrale (210) ;
∘ une première portion (221) comprenant au moins une première nappe (221a) d'au moins un premier matériau composite formé par un premier faisceau unidirectionnel de fibres dans une matrice et s'étendant dans la zone périphérique (220) et dans la zone centrale (210) selon un premier axe d'extension (231) parallèle à une direction principale d'extension des fibres du premier faisceau unidirectionnel ;
∘ une deuxième portion (222) comprenant au moins une deuxième nappe (222a) d'au moins un deuxième matériau composite formé par un deuxième faisceau unidirectionnel de fibres dans une matrice et s'étendant dans la zone périphérique (220) et dans la zone centrale (210) selon un deuxième axe d'extension (241) parallèle à une direction principale d'extension des fibres du deuxième faisceau unidirectionnel, le deuxième axe d'extension (241) étant différent du premier axe d'extension (231) ;
et **caractérisé en ce que** la première portion (221) et la deuxième portion (222) sont superposées l'une relativement à l'autre au niveau de la zone centrale (210) définissant un empilement multidirectionnel (211) de faisceaux unidirectionnels au sein duquel des parties de la première nappe et des parties de la deuxième nappe sont superposées de manière alternée.

2. Dispositif (200) selon la revendication précédente dans lequel l'empilement multidirectionnel (211) comprend au moins un renfort multidirectionnel disposé entre au moins la première nappe (221a) et la deuxième nappe (222a).

3. Dispositif (200) selon l'une quelconque des revendications précédentes dans lequel le premier axe d'extension (231) et le deuxième axe d'extension (241) sont orthogonaux à l'axe de rotation (310) de la roue (100).

4. Dispositif (200) selon l'une quelconque des revendications précédentes dans lequel la zone périphérique (220) comprend au moins une portion périphérique (260, 270) configurée pour former au moins en partie une portion de la jante (400) comprenant au moins l'une parmi : une partie du fond de la jante (410), une partie d'au moins un talon (420) de la jante (400), une partie d'au moins un rebord (430) de la jante (400).

5. Dispositif (200) selon l'une quelconque des revendications précédentes dans lequel une portion de la première nappe (221a) et/ou de la deuxième nappe (222a) au niveau de la zone périphérique (220) est inclinée et/ou courbée relativement à un plan comprenant le premier (231) et le deuxième (241) axes d'extension.

6. Dispositif (200) selon l'une quelconque des revendications précédentes comprenant au moins une troisième portion (223) comprenant au moins une troisième nappe (223a) d'au moins un troisième matériau composite formé par un troisième faisceau unidirectionnel de fibres dans une matrice et s'étendant dans la zone périphérique (220) et dans la zone centrale (210) selon un troisième axe d'extension (251) parallèle à une direction principale d'extension des fibres du troisième faisceau unidirectionnel, le troisième axe d'extension (251) étant différent du premier axe d'extension (231) et du deuxième axe d'extension (241), et dans lequel la première portion (221), la deuxième portion (222) et la troisième portions (223) sont superposées les unes relativement aux autres au niveau de la zone centrale (210) de sorte que les parties de la première nappe, les parties de la deuxième nappe et les parties de la troisième nappe soient superposées de manière alternée au sein de l'empilement multidirectionnel (211) de faisceaux unidirectionnels.

7. Ensemble d'au moins un premier dispositif (201) selon l'une quelconque des revendications précédentes et d'au moins un deuxième dispositif (202) selon l'une quelconque des revendications précédentes, le premier dispositif (201) et le deuxième dispositif (202) étant solidaires l'un de l'autre au niveau d'au moins une zone de solidarisation (205), et de préférence dans lequel la zone de solidarisation (205) est prise parmi au moins: une partie de la zone centrale (210) du premier (201) et/ou deuxième (202) dispositif, une partie de la zone périphérique (220) du premier (201) et/ou deuxième (202) dispositif, une partie de la première portion (221) du premier (201) et/ou deuxième (202) dispositif, une partie de la deuxième portion (222) du premier (201) et/ou deuxième (202) dispositif.

8. Procédé de fabrication d'au moins un dispositif (200) selon l'une quelconque des revendications 1 à 6 comprenant au moins les étapes suivantes :
∘ Positionnement de la première nappe (221a) selon le premier axe d'extension (231) de sorte à définir au moins un premier axe de rayonnage de la roue (100)
∘ Positionnement de la deuxième nappe (222a) selon le deuxième axe d'extension (241) de sorte à définir au moins un deuxième axe de rayonnage de la roue (100) différent du premier axe de rayonnage de la roue (100) ;
∘ superposition d'une portion de la deuxième nappe (222a) avec une portion de la première nappe (221a) au niveau de la zone centrale (210) pour définir un empilement multidirectionnel (211) de faisceaux unidirectionnels au sein duquel on alterne en superposition des parties de la première nappe et des parties de la deuxième nappe.

9. Procédé selon la revendication précédente comprenant en outre au moins les étapes suivantes :
∘ Empilement de la première nappe (221a) sur elle-même en la superposant à la deuxième nappe (222a) au niveau de la zone centrale (210) et à elle-même au niveau de la zone périphérique (220) ;
∘ Empilement de la deuxième nappe (222a) sur elle-même en la superposant à la première nappe (221a) au niveau de la zone centrale (210) et à elle-même au niveau de la zone périphérique (220).

10. Procédé selon l'une quelconque des deux revendications précédentes comprenant au moins une étape de découpe d'une portion au moins de la première nappe (221a) au niveau de la zone périphérique (220) de sorte à former une première pluralité de rayons (232) de la roue (100) à partir de la première nappe (221a), et/ou comprenant au moins une étape de découpe d'une portion au moins de la deuxième nappe (222a) au niveau de la zone périphérique (220) de sorte à former une deuxième pluralité de rayons (242) de la roue (100) à partir de la deuxième nappe (222a).

11. Procédé selon l'une quelconque des trois revendications précédentes comprenant au moins une étape d'emboutissage configurée pour déformer au moins une portion (261, 262) de la première (221a) et/ou de la deuxième (222a) nappe et/ou comprenant au moins la déformation d'une portion (261, 262) de la première (221a) et/ou de la deuxième (222a) nappe au niveau de la zone périphérique (220) de sorte à incliner au moins l'un parmi le premier axe de rayonnage et le deuxième axe de rayonnage relativement à un plan comprenant le premier (231) et le deuxième (241) axe d'extension.

12. Procédé selon l'une quelconque des quatre revendications précédentes comprenant au moins une étape de formation d'une partie au moins de la jante (400) de la roue (100) par enroulement d'au moins une nappe additionnelle autour de la zone périphérique (220) relativement à l'axe de rotation (310) de la roue (100).

13. Machine (500) de mise en œuvre du procédé selon l'une quelconque des revendications 8 à 12 comprenant au moins :
∘ un cadre (501) comprenant une partie centrale (502) et une partie périphérique (503) et supportant au moins :
• un premier bras mobile (510) s'étendant selon une direction orthogonale au premier axe d'extension (231) et étant destiné à porter au moins une première bobine (511) comprenant un enroulement de la première nappe (221a), l'enroulement de la première nappe (221a) étant réalisé selon un axe orthogonal au premier axe d'extension (231) ; **caractérisé par**
• un deuxième bras mobile (520) s'étendant selon une direction orthogonale au deuxième axe d'extension (241) et étant destiné à porter au moins une deuxième bobine (521) comprenant un enroulement de la deuxième nappe (222a), l'enroulement de la deuxième nappe (222a) étant réalisé selon un axe orthogonal au deuxième axe d'extension (241) ;
∘ le premier bras mobile (510) étant configuré pour dérouler la première nappe (221a) selon le premier axe d'extension (231) dans la partie périphérique (503) et dans la partie centrale (502) du cadre (501) ;
∘ le deuxième bras mobile (520) étant configuré pour dérouler la deuxième nappe (222a) selon le deuxième axe d'extension (241) dans la partie périphérique (503) et dans la partie centrale (502) du cadre (501) de sorte à superposer une portion de la deuxième nappe (222a) avec une portion de la première nappe (221a) au niveau de la partie centrale (502) du cadre (501) définissant un empilement multidirectionnel (211) de faisceaux unidirectionnels au sein duquel sont alternées en superposition des parties de la première nappe et des parties de la deuxième nappe.

14. Machine (500) selon la revendication précédente dans lequel le cadre (501) supporte en outre au moins :
∘ un premier bras fixe (512) s'étendant selon une direction parallèle au premier bras mobile (510) ;
∘ un premier bras de butée (513) s'étendant selon une direction parallèle au premier bras mobile (510), le premier bras fixe (512) et le premier bras de butée (513) étant disposés de part et d'autre de la partie centrale (502) ;
∘ un deuxième bras fixe (522) s'étendant selon une direction parallèle au deuxième bras mobile (520) ;
∘ un deuxième de butée (523) s'étendant selon une direction parallèle au deuxième bras mobile (520), le deuxième bras fixe (522) et le deuxième bras de butée (523) étant disposés de part et d'autre de la partie centrale (502) ;
le premier bras mobile (510) étant configuré pour dérouler la première nappe (221a) selon le premier axe d'extension (231) depuis le premier bras fixe (512) jusqu'au premier bras de butée (513) ;
le deuxième bras mobile (520) étant configuré pour dérouler la deuxième nappe (222a) selon le deuxième axe d'extension (241) depuis le deuxième bras fixe (522) jusqu'au deuxième bras de butée (523),
machine de préférence dans laquelle le premier bras mobile (510) est configuré, en outre, pour dérouler la première nappe (221a) selon le premier axe d'extension (231) depuis le premier bras de butée (513) jusqu'au premier bras fixe (512) de sorte à superposer une portion au moins de la première nappe (221a) avec une portion de la deuxième nappe (222a) au niveau de la partie centrale (502) du cadre (501), et/ou dans laquelle le deuxième bras mobile (520) est configuré pour dérouler la deuxième nappe (222a) selon le deuxième axe d'extension (251) depuis le deuxième bras de butée (523) jusqu'au deuxième bras fixe (522) de sorte à superposer une portion au moins de la deuxième nappe (222a) avec une portion de la première nappe (221a) au niveau de la partie centrale (502) du cadre (501).

15. Machine (500) selon l'une quelconque des deux revendications précédente dans laquelle le cadre (501) comprend en outre au moins :
∘ Une première pièce de support (514) du premier bras mobile (510) s'étendant de préférence selon un axe d'extension orthogonal au premier axe d'extension (231) ;
∘ Une deuxième pièce de support (524) du deuxième bras mobile (520) s'étendant de préférence selon un axe d'extension orthogonal au deuxième axe d'extension (241).

## Patentansprüche

1. Vorrichtung (200), die dazu konfiguriert ist, zumindest zum Teil mindestens eine Schüssel eines Rads (100) zu bilden, umfassend eine Felge (400) und mindestens eine Stütze einer Nabe (300), die eine Drehachse (310) definiert, wobei die Vorrichtung (200) mindestens umfasst:
o eine zentrale Zone (210);
o eine Umfangszone (220), die die zentrale Zone (210) zum Teil umgibt;
o einen ersten Abschnitt (221), umfassend mindestens eine erste Einlage (221a) aus mindestens einem ersten Verbundmaterial, die durch ein erstes unidirektionales Bündel von Fasern in einer Matrix gebildet wird und sich in der Umfangszone (220) und in der zentralen Zone (210) entlang einer ersten Erstreckungsachse (231), die parallel zu einer Haupterstreckungsrichtung von Fasern des ersten unidirektionalen Bündels ist, erstreckt;
o einen zweiten Abschnitt (222), umfassend mindestens eine zweite Einlage (222a) aus mindestens einem zweiten Verbundmaterial, die durch ein zweites unidirektionales Bündel von Fasern in einer Matrix gebildet wird und sich in der Umfangszone (220) und in der zentralen Zone (210) entlang einer zweiten Erstreckungsachse (241), die parallel zu einer Haupterstreckungsrichtung von Fasern des zweiten unidirektionalen Bündels ist, erstreckt, wobei die zweite Erstreckungsachse (241) sich von der ersten Erstreckungsachse (231) unterscheidet;
und **dadurch gekennzeichnet, dass** der erste Abschnitt (221) und der zweite Abschnitt (222) auf Höhe der zentralen Zone (210) zueinander überlagert sind, wodurch ein multidirektionaler Stapel (211) von unidirektionalen Bündeln definiert wird, in dem Teile der ersten Einlage und Teile der zweiten Einlage alternierend überlagert sind.

2. Vorrichtung (200) nach dem vorhergehenden Anspruch, wobei der multidirektionale Stapel (211) mindestens eine multidirektionale Verstärkung umfasst, die zwischen mindestens der ersten Einlage (221a) und der zweiten Einlage (222a) angeordnet ist.

3. Vorrichtung (200) nach einem der vorhergehenden Ansprüche, wobei die erste Erstreckungsachse (231) und die zweite Erstreckungsachse (241) orthogonal zur Drehachse (310) des Rads (100) sind.

4. Vorrichtung (200) nach einem der vorhergehenden Ansprüche, wobei die Umfangszone (220) mindestens einen Umfangsabschnitt (260, 270) umfasst, der dazu konfiguriert ist, zumindest zum Teil einen Abschnitt der Felge (400) zu bilden, umfassend mindestens einen von: einem Teil des Betts der Felge (410), einem Teil von mindestens einer Schulter (420) der Felge (400), einem Teil von mindestens einem Horn (430) der Felge (400).

5. Vorrichtung (200) nach einem der vorhergehenden Ansprüche, wobei ein Abschnitt der ersten Einlage (221a) und/oder der zweiten Einlage (222a) auf Höhe der Umfangszone (220) in Bezug auf eine Ebene, umfassend die erste (231) und die zweite (241) Erstreckungsachse, geneigt und/oder gebogen ist.

6. Vorrichtung (200) nach einem der vorhergehenden Ansprüche, umfassend mindestens einen dritten Abschnitt (223), umfassend mindestens eine dritte Einlage (223a) aus mindestens einem dritten Verbundmaterial, die durch ein drittes undirektionales Bündel von Fasern in einer Matrix gebildet wird und sich in der Umfangszone (220) und in der zentralen Zone (210) entlang einer dritten Erstreckungsachse (251), die parallel zu einer Haupterstreckungsrichtung von Fasern des dritten unidirektionalen Bündels ist, erstreckt, wobei die dritte Erstreckungsachse (251) sich von der ersten Erstreckungsachse (231) und der zweiten Erstreckungsachse (241) unterscheidet, und wobei der erste Abschnitt (221), der zweite Abschnitt (222) und die dritten Abschnitte (223) auf Höhe der zentralen Zone (210) relativ zueinander überlagert sind, so dass die Teile der ersten Einlage, die Teile der zweiten Einlage und die Teile der dritten Einlage in dem multidirektionalen Stapel (211) von unidirektionalen Bündeln alternierend überlagert sind.

7. Einheit von mindestens einer ersten Vorrichtung (201) nach einem der vorhergehenden Ansprüche und mindestens einer zweiten Vorrichtung (202) nach einem der vorhergehenden Ansprüche, wobei die erste Vorrichtung (201) und die zweite Vorrichtung (202) auf Höhe von mindestens einer Verbindungszone (205) miteinander verbunden sind und vorzugsweise wobei die Verbindungszone (205) genommen ist aus: einem Teil der zentralen Zone (210) der ersten (201) und/oder der zweiten (202) Vorrichtung, einem Teil der Umfangszone (220) der ersten (201) und/oder der zweiten (202) Vorrichtung, einem Teil des ersten Abschnitts (221) der ersten (201) und/oder der zweiten (202) Vorrichtung, einem Teil des zweiten Abschnitts (222) der ersten (201) und/oder der zweiten (202) Vorrichtung.

8. Verfahren zur Herstellung von mindestens einer Vorrichtung (200) nach einem der Ansprüche 1 bis 6, umfassend mindestens die folgenden Schritte:
o Positionieren der ersten Einlage (221a) entlang der ersten Erstreckungsachse (231), um mindestens eine erste Einspeichachse des Rads (100) zu definieren;
o Positionieren der zweiten Einlage (222a) entlang der zweiten Erstreckungsachse (241), um mindestens eine zweite Einspeichachse des Rads (100), die sich von der ersten Einspeichachse des Rads (100) unterscheidet, zu definieren;
o Überlagern eines Abschnitts der zweiten Einlage (222a) mit einem Abschnitt der ersten Einlage (221a) auf Höhe der zentralen Zone (210), um einen multidirektionalen Stapel (211) von unidirektionalen Bündeln zu definieren, in dem Teile der ersten Einlage und Teile der zweiten Einlage überlagert alterniert sind.

9. Verfahren nach dem vorhergehenden Anspruch, weiterhin umfassend mindestens die folgenden Schritte:
o Stapeln der ersten Einlage (221a) auf sich selbst, indem sie mit der zweiten Einlage (222a) auf Höhe der zentralen Zone (210) und mit sich selbst auf Höhe der Umfangszone (220) überlagert wird;
o Stapeln der zweiten Einlage (222a) auf sich selbst, indem sie mit der ersten Einlage (221a) auf Höhe der zentralen Zone (210) und mit sich selbst auf Höhe der Umfangszone (220) überlagert wird.

10. Verfahren nach einem der zwei vorhergehenden Ansprüche, umfassend mindestens einen Schritt eines Schneidens von mindestens einem Abschnitt von mindestens der ersten Einlage (221a) auf Höhe der Umfangszone (220), um eine erste Vielzahl von Speichen (232) des Rads (100) aus der ersten Einlage (221a) zu bilden, und/oder umfassend mindestens einen Schritt eines Schneidens von mindestens einem Abschnitt von mindestens der zweiten Einlage (222a) auf Höhe der Umfangszone (220), um eine zweite Vielzahl von Speichen (242) des Rads (100) aus der zweiten Einlage (222a) zu bilden.

11. Verfahren nach einem der drei vorhergehenden Ansprüche, umfassend mindestens einen Schritt eines Ziehens, der dazu konfiguriert ist, mindestens einen Abschnitt (261, 262) der ersten (221a) und/oder der zweiten (222a) Einlage zu verformen, und/oder umfassend mindestens die Verformung eines Abschnitts (261, 262) der ersten (221a) und/oder der zweiten (222a) Einlage auf Höhe der Umfangszone (220), um mindestens eine von der ersten Einspeichachse und der zweiten Einspeichachse in Bezug auf eine Ebene, umfassend die erste (231) und die zweite (241) Erstreckungsachse zu neigen.

12. Verfahren nach einem der vier vorhergehenden Ansprüche, umfassend mindestens einen Schritt eines Bildens eines Teils von mindestens der Felge (400) des Rads (100) durch Aufwickeln von mindestens einer zusätzlichen Einlage um die Umfangszone (220) in Bezug auf die Drehachse (310) des Rads (100).

13. Maschine (500) zur Durchführung des Verfahrens nach einem der Ansprüche 8 bis 12, umfassend mindestens:
o einen Rahmen (501), umfassend einen zentralen Teil (502) und einen Umfangsteil (503) und stützend mindestens:
• einen ersten beweglichen Arm (510), der sich entlang einer Richtung orthogonal zu der ersten Erstreckungsachse (231) erstreckt und dazu vorgesehen ist, mindestens eine erste Spule (511), umfassend eine Aufwicklung der ersten Einlage (221a), zu tragen, wobei die Aufwicklung der ersten Einlage (221a) entlang einer Achse orthogonal zu der ersten Erstreckungsachse (231) umgesetzt ist, **gekennzeichnet durch**
• einen zweiten beweglichen Arm (520), der sich entlang einer Richtung orthogonal zu der zweiten Erstreckungsachse (241) erstreckt und dazu vorgesehen ist, mindestens eine zweite Spule (521), umfassend eine Aufwicklung der zweiten Einlage (222a), zu tragen, wobei die Aufwicklung der zweiten Einlage (222a) entlang einer Achse orthogonal zu der zweiten Erstreckungsachse (241) umgesetzt ist;
o wobei der erste bewegliche Arm (510) dazu konfiguriert ist, die erste Einlage (221a) entlang der ersten Erstreckungsachse (231) in dem Umfangsteil (503) und in dem zentralen Teil (502) des Rahmens (501) abzuwickeln;
o wobei der zweite bewegliche Arm (520) dazu konfiguriert ist, die zweite Einlage (222a) entlang der zweiten Erstreckungsachse (241) in dem Umfangsteil (503) und in dem zentralen Teil (502) des Rahmens (501) abzuwickeln, so dass ein Abschnitt der zweiten Einlage (222a) mit einem Abschnitt der ersten Einlage (221a) auf Höhe des zentralen Teils (502) des Rahmens (501) überlagert wird, wodurch ein multidirektionaler Stapel (211) von unidirektionalen Bündeln definiert wird, in dem Teile der ersten Einlage und Teile der zweiten Einlage überlagert alterniert sind.

14. Maschine (500) nach dem vorhergehenden Anspruch, wobei der Rahmen (501) weiterhin mindestens stützt:
o einen ersten feststehenden Arm (512), der sich entlang einer Richtung parallel zu dem ersten beweglichen Arm (510) erstreckt;
o einen ersten Anschlagarm (513), der sich entlang einer Richtung parallel zu dem ersten beweglichen Arm (510) erstreckt, wobei der erste feststehende Arm (512) und der erste Anschlagarm (513) auf beiden Seiten des zentralen Teils (502) angeordnet sind;
o einen zweiten feststehenden Arm (522), der sich entlang einer Richtung parallel zu dem zweiten beweglichen Arm (520) erstreckt;
o einen zweiten Anschlagarm (523), der sich entlang einer Richtung parallel zu dem zweiten beweglichen Arm (520) erstreckt, wobei der zweite feststehende Arm (522) und der zweite Anschlagarm (523) auf beiden Seiten des zentralen Teils (502) angeordnet sind;
wobei der erste bewegliche Arm (510) dazu konfiguriert ist, die erste Einlage (221a) entlang der ersten Erstreckungsachse (231) von dem ersten feststehenden Arm (512) bis zum ersten Anschlagarm (513) abzuwickeln;
wobei der zweite bewegliche Arm (520) dazu konfiguriert ist, die zweite Einlage (222a) entlang der zweiten Erstreckungsachse (241) von dem zweiten feststehenden Arm (522) bis zum zweiten Anschlagarm (523) abzuwickeln;
wobei vorzugsweise in der Maschine der erste bewegliche Arm (510) weiterhin dazu konfiguriert ist, die erste Einlage (221a) entlang der ersten Erstreckungsachse (231) von dem ersten Anschlagarm (513) bis zum ersten feststehenden Arm (512) abzuwickeln, so dass ein Abschnitt von mindestens der ersten Einlage (221a) mit einem Abschnitt der zweiten Einlage (222a) auf Höhe des zentralen Teils (502) des Rahmens (501) überlagert wird, und/oder der zweite bewegliche Arm (520) dazu konfiguriert ist, die zweite Einlage (222a) entlang der zweiten Erstreckungsachse (251) von dem zweiten Anschlagarm (523) bis zum zweiten feststehenden Arm (522) abzuwickeln, so dass ein Abschnitt von mindestens der zweiten Einlage (222a) mit einem Abschnitt der ersten Einlage (221a) auf Höhe des zentralen Teils (502) des Rahmens (501) überlagert wird.

15. Maschine (500) nach einem der zwei vorhergehenden Ansprüche, wobei der Rahmen (501) weiterhin mindestens umfasst:
o ein erstes Stützteil (514) des ersten beweglichen Arms (510), das sich vorzugsweise entlang einer Erstreckungsachse orthogonal zu der ersten Erstreckungsachse (231) erstreckt;
∘ ein zweites Stützteil (524) des zweiten beweglichen Arms (520), das sich vorzugsweise entlang einer Erstreckungsachse orthogonal zu der zweiten Erstreckungsachse (241) erstreckt.

## Claims

1. A device (200) configured to form at least partly at least one disc of a wheel (100) comprising a rim (400) and at least one support of at least one hub (300) defining a rotational axis (310), the device (200) comprising at least:
o One central point (210);
o One peripheral point (220) partly surrounding the central point (210);
o One first portion (221) comprising at least one first layer (221a) of at least one first composite material formed by a first unidirectional fibre bundle in a matrix and extending in the peripheral point (220) and in the central point (210) in a first extension axis (231) parallel to a main direction of extension of the fibres of the first unidirectional bundle;
o A second portion (222) comprising at least one second layer (222a) of at least a second composite material formed by a second unidirectional fibre bundle in a matrix and extending in the peripheral point (220) and in the central point (210) in a second extension axis (241) parallel to a main direction of extension of the fibres of the second unidirectional bundle, the second extension axis (241) being different from the first extension axis (231);
and **characterised in that** the first portion (221) and the second portion (222) are placed on top of each other at the level of the central point (210) defining a multidirectional stack (211) of unidirectional bundles wherein the parts of the first layer and the parts of the second layer and placed on each other in an alternating manner.

2. The device (200) according to the previous claim wherein the multidirectional stack (211) comprises at least a multidirectional reinforcements arranged between at least the first layer (221a) and the second layer (222a).

3. The device (200) according to any of the previous claims wherein the first extension axis (231) and the second extension axis (241) are orthogonal to the rotational axis (310) of the wheel (100).

4. The device (200) according to any of the previous claims wherein the peripheral point (220) comprises at least one peripheral portion (260, 270) configured to at least partly form a portion of the rim (400) comprising at least one from: a part of the rim base (410), a part of at least a bead (420) of the rim (400), a part of at least one flange (430) of the rim (400).

5. The device (200) according to any of the previous claims wherein a portion of the first layer (221a) and/or of the second layer (222a) at the level of the peripheral point (220) is inclined and/or curved relative to a plane comprising the first (231) and the second (241) extension axes.

6. The device (200) according to any of the previous claims comprising at least a third portion (223) comprising at least a third layer (223a) of at least a third composite material formed by at least a third unidirectional fibre bundle in a matrix and extending in the peripheral point (220) and in the central point (210) in a third extension axis (251) parallel to a main direction of extension of the fibres of the third unidirectional bundle, the third extension axis (251) being different from the first extension axis (231) and the second extension axis (241), and wherein the first portion (222) and the third portion (223) are place on top of each other at the level of the central point (210) such that the parts of the first layer, the parts of the second layer and the parts of the third layer are placed on top of each other in an alternating manner within a multidirectional stack (211) of unidirectional bundles.

7. A set of at least one first device (201) according to any of the previous claims and at least a second device (202) according to any of the previous claims, the first device (201) and the second device (202) being secured to each other at the level of at least a securing point (205), and preferably wherein the securing point (205) is taken from at least: a part of the central point (210) of the first device (201) and/or the second device (202), a part of the peripheral point (220) of the first device (201) and/or the second device (202), a part of the first portion (221) of the first device (201) and/or the second device (202), a part of the second portion (222) of the first device (201) and/or the second device (202).

8. A method for manufacturing at least a device (200) according to any of claims 1 to 6 comprising at least the following steps:
o Positioning the first layer (221a) in the first extension axis (231) so as to define at least a first axis of radiation of the wheel (100);
o Positioning the second layer (222a) according to the second extension axis (241) so as to define at least a second axis of radiation of the wheel (100) that is different from the first axis of radiation of the wheel (100);
o Placing a portion of the second layer (222a) and a portion of the first layer (221a) on top of each other at the level of the central point (210) to define a multidirectional stack (211) of unidirectional bundles wherein parts of the first layer and parts of the second layer are placed on top of each other in an alternating manner.

9. The method according to the previous claim comprising additionally at least the following steps:
o Stacking the first layer (221a) on itself by placing it on top of the second layer (222a) at the level of the central point (210) and on itself at the level of the peripheral point (220);
o Stacking the second layer (222a) on itself by placing it on top of the first layer (221a) at the level of the central point (210) and on itself at the level of the peripheral point (220).

10. The method according to any of the two previous claims comprising at least a step of cutting at least a portion of the first layer (221a) at the level of the peripheral point (220) so as to form a first series of spokes (232) for the wheel (100) starting from the first layer (221a), and/or comprising at least a step of cutting at least a portion of the second layer (222a) at the level of the peripheral point (220) so as to form a second series of spokes (242) for the wheel (100) starting from the second layer (222a).

11. The method according to any of the three previous claims comprising at least a crimping step configured to deform at least a portion (261, 262) of the first layer (221a) and/or the second layer (222a), and/or comprising at least the deformation of a portion (261, 262) of the first layer (221a) and/or the second layer (222a) at the level of the peripheral point (220) so as to incline at least one of the first axis of radiation and the second axis of radiation relative to a plane comprising the first extension axis (231) and the second extension axis (241).

12. The method according to any of the four previous claims comprising at least a step of forming at least a part of the rim (400) of the wheel (100) by wrapping at least one additional layer around the peripheral point (220) relative to the rotational axis (310) of the wheel (100).

13. A machine (500) to implement the method according to any of claims 8 to 12 comprising at least:
∘ A frame (501) comprising a central part (502) and a peripheral part (503) and bearing at least:
• A first mobile arm (510) extending in an orthogonal direction in the first extension axis (231) and being designed to carry at least a first spool (511) comprising a wrapping of the first layer (221a), the wrapping of the first layer (221a) having been carried out in an orthogonal axis in the first extension axis (231) **characterised by**
• A second mobile arm (520) extending in an orthogonal direction in the second extension axis (241) and designed to carry at least a second spool (521) comprising a wrapping of the second layer (222a), the wrapping of the second layer (222a) having been carried out in an orthogonal axis in the second extension axis (241);
o The first mobile arm (510) being configured to unwrap the first layer (221a) in the first extension axis (231) in the peripheral part (503) and in the central part (502) of the frame (501);
o The second mobile arm (520) being configured to unwrap the second layer (222a) in the second extension axis (241) in the peripheral part (503) and in the central part (502) of the frame (501) so as to place a portion of the second layer (222a) on top of a portion of the first layer (221a) at the level of the central part (502) of the frame (501) defining a multidirectional stack (211) of unidirectional bundles wherein parts of the first layer and parts of the second layer are placed on top of each other in an alternating manner.

14. The machine (500) according to the previous claim wherein the frame (501) additionally bears at least:
∘ A first fixed arm (512) extending in a direction parallel to the first mobile arm (510);
o A first stop arm (513) extending in a direction parallel to the first mobile arm (510), the first fixed arm (512) and the first stop arm (513) being arranged on either side of the central part (502);
o A second fixed arm (522) extending in a direction parallel to the second mobile arm (520);
∘ A second stop arm (523) extending in a direction parallel to the second mobile arm (520), the second fixed arm (522) and the second stop arm (523) being arranged on either side of the central part (502);
The first mobile arm (510) being configured to unwrap the first layer (221a) in the first extension axis (231) starting from the first fixed arm (512) right up to the first stop arm (513);
The second mobile arm (520) being configured to unwrap the second layer (222a) in the second extension axis (241) starting from the second fixed arm (522) right up to second stop arm (523).
The machine preferably wherein the first mobile arm (510) is configured additionally to unwrap the first layer (221a) in the first extension axis (231) starting from the first stop arm (513) right up to the first fixed arm (512) so as to place at least a portion of the first layer (221a) on top of a portion of the second layer (222a) at the level of the central part (502) of the frame (501), and/or wherein the second mobile arm (520) is configured to unwrap the second layer (222a) in the second extension axis (251) starting from the second stop arm (523) right up to the second fixed arm (522) so as to place at least a portion of the second layer (222a) on top of a portion of the first layer (221a) at the level of the central part (502) of the frame (501).

15. The machine (500) according to any of the previous claims wherein the frame (501) additionally comprises at least:
o A first supporting part (514) of the first mobile arm (510) extending preferably in an extension axis orthogonal to the first extension axis (231);
o A second supporting part (524) of the second mobile arm (520) extending preferably in an extension axis orthogonal to the second extension axis (241).
